# EUROPÄISCHE PATENTANMELDUNG

(11) **EP 2 995 415 A1**
(43) Veröffentlichungstag der Anmeldung: **16.03.2016**
(21) Anmeldenummer: 15181551.1
(22) Anmeldetag: 19.08.2015
(51) Int. Cl.: B23K 26/361, F21S 8/10

(54) **VERFAHREN ZUM LASERSCHNEIDEN VON FAHRZEUGLEUCHTEN UND/ODER BAUTEILEN VON FAHRZEUGLEUCHTEN, INSBESONDERE LICHTSCHEIBEN VON FAHRZEUGLEUCHTEN**

(30) Priorität: 05.09.2014 DE 102014112803
(71) Anmelder: odelo GmbH, 70329 Stuttgart (DE)
(72) Erfinder: RICKING, Thorsten, 71364 Winnenden (DE); KUTTERER, Achim, 70563 Stuttgart (DE)
(74) Vertreter: Benninger, Johannes

(57) **Zusammenfassung**

Es wird ein Verfahren zum Laserschneiden von Bauteilen (100, 101) beschrieben, welches vorsieht, einen von einer Laserlichtquelle ausgehenden Laserstrahl (200) auf ein Bauteil (100, 101) zu richten und den Auftreffpunkt (300) des Laserstrahls (200) auf einer Oberflächenpartie (400) des Bauteils (100, 101) entlang einer auszubildenden Schnittlinie einer herzustellenden Schnittkante (500) zu führen. Die Schnittkante (500) setzt sich zusammen aus der Schnittlinie, welche entlang einer dem Auftreffpunkt (300) des von der Laserlichtquelle ausgehenden Laserstrahls (200) zugewandten Oberfläche (140) eines zu beschneidenden Bauteils (100, 101) verläuft, und einer sich aus der Sicht des Auftreffpunkts (200) des Laserstrahls (200) gesehen an diese Schnittlinie anschließenden Schnittfläche (501), die sich bei einem vollständigen Schnitt von der Schnittlinie auf der dem Auftreffpunkt (300) des von der Laserlichtquelle ausgehenden Laserstrahls (200) zugewandten Oberflächenpartie (400) ausgehend durch die gesamte Dicke des Bauteils (100, 101) hindurch erstreckt. Die Schnittfläche (501) schließt sich in einem in einer normal zur Schnittlinie liegenden Ebene verlaufenden Querschnitt durch das Bauteil (100, 101) hindurch unter einem Winkel (700) an eine an der Schnittlinie an die dem Auftreffpunkt (300) des von der Laserlichtquelle ausgehenden Laserstrahls (200) zugewandte Oberflächenpartie (400) angelegte Tangente (400) an. Bei einer Betrachtung in mindestens einem in einer normal zur Schnittlinie liegenden Ebene verlaufenden Querschnitt durch das Bauteil (100, 101) schließen die Tangente (600) an die dem Auftreffpunkt (300) des von der Laserlichtquelle ausgehenden Laserstrahls (200) zugewandte Oberflächenpartie (400) und die Schnittfläche (501) aus Sicht der Schnittlinie zum Bauteil hin einen stumpfen Winkel (700) ein.

## Beschreibung

Die Erfindung betrifft ein Verfahren gemäß dem Oberbegriff des Anspruchs 1.

Mit zunehmender Fertigungspräzision in der Automobiltechnik steigen die Anforderungen an die Passgenauigkeit von Fahrzeugteilen. Dabei gilt das Hauptaugenmerk dem vom Endkunden unmittelbar erkennbaren äußeren Erscheinungsbild von Kraftfahrzeugen, oft widergespiegelt durch das so genannte Spaltmaß, welches für Maßhaltigkeit, Abstand sowie Lage, beispielsweise hinsichtlich einer Verdrehlage, zweier oder mehrerer erkennbar unterschiedlicher, aneinander angrenzender Fahrzeugteile steht. Dabei ist ein möglichst gleichmäßiges und/oder kleines Spaltmaß einzuhalten, um die Qualitätsanforderungen einerseits hinsichtlich des Erscheinungsbilds und andererseits hinsichtlich einer möglichst strömungsgünstigen und "aus einem Guss" erscheinenden Fahrzeugoberfläche bzw. -kontur zu erfüllen.

Besonders augenfällig ist dies bei Kraftfahrzeugleuchten im Allgemeinen und Kraftfahrzeugheckleuchten im Speziellen, welche sich je nach Fahrzeugmodell teils nahtlos, teils mit möglichst präzise und gleichmäßig einzuhaltendem Spaltmaß bündig in die Karosserie bzw. Karosserieteile des Fahrzeugmodells einfügen müssen.

Ausgehend von der Automobilindustrie breiten sich diese Anforderungen auch auf andere Industriezweige aus, welche Fahrzeuge beispielsweise für den Einsatz zu Lande, zu Wasser und in der Luft entwickeln und herstellen. Im Folgenden ist daher vereinfacht von Fahrzeugen und Fahrzeugleuchten die Rede, gleich ob es sich hierbei um Leuchten für im Sinne von landgestützten Kraftfahrzeugen motorisch angetriebene Automobile, oder um sonstige landgestützte Fahrzeuge, oder um Flugzeuge, Fluggeräte oder Fahrzeuge zur See handelt, es sei denn, es ist explizit etwas anderes erwähnt.

Eine Fahrzeugleuchte umfasst im Wesentlichen einen von einem Leuchtengehäuse und einer Lichtscheibe zumindest teilweise umschlossenen Leuchteninnenraum und mindestens ein darin beherbergtes Leuchtmittel mit zumindest einer zur Erfüllung wenigstens einer Lichtfunktion der Fahrzeugleuchte dienenden Lichtquelle, sowie gegebenenfalls zugehörige, beispielsweise zum Betrieb der einen oder mehreren Lichtquellen erforderliche Elektronikbauteile. In dem Leuchteninnenraum kann mindestens ein von außerhalb des Leuchteninnenraums durch eine oder mehrere von der Lichtscheibe verschlossene Lichtöffnungen hindurch gesehen hinter wenigstens einer Lichtquelle des zumindest einen Leuchtmittels angeordneter Reflektor untergebracht sein. Der Reflektor kann zumindest zum Teil durch ein separates Bauteil und/oder durch wenigstens einen Teil des Leuchtengehäuse selbst, beispielsweise vermittels einer zumindest teilweisen reflektierenden Beschichtung, gebildet sein.

Bei einer Lichtfunktion handelt es sich dabei um eine durch Abstrahlung von Licht einer bestimmten Farbe in einer bestimmten Helligkeit und Richtung verwirklichte, zur Erfüllung einer Aufgabe vorgesehene Funktion der Fahrzeugleuchte. Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine beispielsweise eine Fahrbahn ausleuchtende Funktion, oder bei einer Ausgestaltung als Signalleuchte speziell bei Kraftfahrzeugen eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer auch als Schlusslichtfunktion bezeichneten Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte. Beispiele für Fahrzeugleuchten im Automobilbereich sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Die Lichtscheibe ist durch eine transparente Abdeckung gebildet, welche den Leuchteninnenraum sowie die von diesem beherbergten Bauteile gegen Witterungseinflüsse schützt. Die Abdeckung ist hierbei wenigstens für einen Wellenlängenbereich elektromagnetischer Wellen transparent, der zumindest einen vom für das menschliche Auge sichtbaren Teil des Spektrums elektromagnetischer Wellen umfasst. Ein solcher Wellenlängenbereich wird nachfolgend als ein für das menschliche Auge sichtbarer Bereich bezeichnet.

Um den Eingangs erwähnten Anforderungen nachzukommen ist bekannt, Bauteile von Fahrzeugleuchten, insbesondere die typischerweise aus einem wenigstens in einem für das menschliche Auge sichtbaren Bereich transparenten Kunststoff hergestellte Lichtscheibe vor oder nach dem Zusammenbau einer Kraftfahrzeugleuchte vermittels Laserschneidens exakt zuzuschneiden.

Beim Laserschneiden handelt es sich um ein thermisches Trennverfahren, bei dem ein fokussierter Laserstrahl den beispielsweise transparenten Kunststoff eines Bauteils einer Fahrzeugleuchte aufschmilzt und verdampft. Durch den geometrisch und thermisch exakt definierten Energieeintrag des Laserstrahls können Konturen an Bauteilen sowohl mit einem ebenen, als auch mit einem von der ebenen Form abweichenden, zweidimensional (2D) gekrümmten oder dreidimensional (3D) gekrümmten und gewölbten Flächenverlauf berührungslos und kraftfrei geschnitten werden. Bei einem Bauteil mit einem ebenen Flächenverlauf verläuft ein Querschnitt in jeder Richtung durch das Bauteil gerade, wohingegen bei einem Bauteil mit einem zweidimensional gekrümmten Flächenverlauf nur ein Querschnitt in einer Richtung durch das Bauteil gerade verläuft, und sich bei einem Bauteil mit einem dreidimensional gekrümmten Flächenverlauf kein Querschnitt mit einem geraden Verlauf durch das Bauteil hindurch findet.

Durch das Laserschneiden können somit wesentlich exaktere Toleranzbearbeitungen durchgeführt werden, als dies mit dem Stand der Technik entsprechenden mechanischen Bearbeitungsanlagen, bei denen gegebenenfalls die Aufnahmepunkte und/oder Anschlagelemente und/oder die Befestigungsvorrichtung bzw. deren Befestigungselemente gesetzt und/oder nachbearbeitet werden müssen, möglich ist.

Beim Laserschneiden treten außerdem keine oder im Vergleich zu einer spanenden Bearbeitung nur sehr wenige Späne oder Partikel auf, die in spanenden Bearbeitungsanlagen trotz Absauganlagen zu Verschmutzungen oder sogar zu Partikeln im Leuchteninnenraum führen können.

Beim Laserschneiden wird eine hierfür vorgesehene, einen Laserstrahl erzeugende Laserlichtquelle vermittels eines automatisch gesteuerten, motorisch angetriebenen Manipulators, wie beispielsweise einem sechsachsigen Roboterarm, welcher die Lage und Ausrichtung eines Manipulatorkopfs und der an diesem angeordneten Laserlichtquelle und damit den Ausgangspunkt und die Richtung des von der Laserlichtquelle abgegebenen Laserstrahls im Raum verändert, entlang einer zu behandelnden Schnittlinie geführt.

Zum Erhalt eines sauberen Schnittbilds des Laserschnitts sind grundsätzlich zwei Prozessparameter verantwortlich.

Ein erster Prozessparameter ist die Verfahrgeschwindigkeit. Die Verfahrgeschwindigkeit gibt an, mit welcher Geschwindigkeit der Laserstrahl entlang der herzustellenden Schnittkante bewegt wird, welche sich aus dem Verlauf einer entlang der der Laserlichtquelle zugewandten Oberfläche eines zu beschneidenden Bauteils verlaufenden Schnittlinie und einer sich an diese Schnittlinie anschließende, sich aus der Sicht des Ausgangspunkts des Laserstrahls gesehen bei einem vollständigen Schnitt durch die gesamte Dicke des Bauteils hindurch erstreckende Schnittfläche zusammensetzt.

Ist die Verfahrgeschwindigkeit zu gering, schmilzt zu viel Material des zu beschneidenden Bauteils und verunreinigt das Schnittbild. Ist die Verfahrgeschwindigkeit zu hoch, kann es vorkommen, dass die Schnittfläche und damit der Schnitt nicht vollständig durch die gesamte Dicke des Bauteils hindurchgeht, wodurch es zu Bruchkanten kommen kann. Ist die Verfahrgeschwindigkeit nicht gleichmäßig, schwankt das Schnittbild zwischen den beiden Extremen.

Um ein möglichst gleichmäßiges Schnittbild zu erhalten, ist daher eine möglichst konstante, auf die Schmelzeigenschaften des Werkstoffs des zu beschneidenden Bauteils abgestimmte Verfahrgeschwindigkeit erforderlich.

Ein zweiter Prozessparameter ist die Verfahrbewegung. Die Verfahrbewegung spiegelt die Bewegungsbahn des Ausgangspunkts und die Richtung des von der Laserlichtquelle abgegebenen Laserstrahls im Raum wieder. Während des Schneidvorganges muss während der Verfahrbewegung ein definierter Abstand zwischen Bauteil und dem Ausgangspunkt des Laserstrahls eingehalten werden.

Zusammen mit dem Abstand des Ausgangspunkts des von der Laserlichtquelle abgegebenen Laserstrahls von der auf der Oberfläche des zu behandelnden Bauteils verlaufenden Schnittlinie und der Lage des Ausgangspunkts und der Richtung des von der Laserlichtquelle abgegebenen Laserstrahls im Raum ergibt sich damit Verlauf und Lage der Schnittkante, entsprechend dem Verlauf der Schnittlinie ebenso wie dem Verlauf der sich an die auf der der Laserlichtquelle zugewandten Oberfläche des Bauteils verlaufende Schnittlinie anschließenden Schnittfläche.

Die Schnittfläche verläuft dabei lokal normal zur angrenzenden Oberfläche des Bauteils, auf dem ein an die Schnittfläche angrenzender Punkt der Schnittlinie liegt, unter anderem, damit die Schnittfläche möglichst klein ist.

Durch EP 2 664 496 A1 ist ein Verfahren zur Herstellung von Kraftfahrzeugleuchten bekannt, welches vorsieht, Kraftfahrzeugleuchten mit in Übermaß gefertigten Lichtscheiben fertigzustellen, welche Lichtscheiben erst im Anschluss an die Fertigstellung der Kraftfahrzeugleuchten mittels Laserschneidens exakt zugeschnitten werden. Ein hierbei unbedachtes Problem ist, dass der Laserzuschnitt einen zwar winzigen, jedoch im Sinne der Zulassungsvorschriften scharfkantigen Wulst bzw. eine Aufwölbung am Lichtscheibenrand zur Folge hat.

Dies hat nicht nur einen nachteiligen Qualitätseindruck zur Folge, sondern führt zu zusätzlichen Nachbehandlungsschritten der hergestellten Schnittkante, um einerseits die Zulassungsvorschriften für Kraftfahrzeuge zu erfüllen, und andererseits Gefahren für Mensch und Tier beim Kontakt mit entsprechenden Schnittkanten auszuschließen.

Eine gängige Methode, vermittels Laserschneidens be- und/oder zugeschnittene, meist aus Kunststoffen hergestellte Bauteile von Fahrzeugleuchten zu entgraten, nutzt Wärmestrahlung (Infrarot-, kurz IR-Strahlung).

Eine entsprechende Vorrichtung nebst einem entsprechenden Verfahren zum berührungsfreien Entgraten von Kunststoffteilen ist durch EP 2 431 146 A1 bekannt.

Nachteilig hieran ist, dass IR-Strahlungseinrichtungen teuer sind, ebenso wie der Zeitaufwand für zusätzliche Nachbehandlungsschritte kostspielig ist.

Der Erfindung liegt die Aufgabe zugrunde, ein Verfahren zum Laserschneiden von Fahrzeugleuchten und/oder Bauteilen von Fahrzeugleuchten, insbesondere

Lichtscheiben von Fahrzeugleuchten zu entwickeln, welches sowohl einen hohen Qualitätseindruck des Schnittbilds unter Erfüllung der Zulassungsvorschriften für Fahrzeuge erlaubt und gleichzeitig ohne teure IR-Strahlungseinrichtungen und zeitaufwändige Nachbehandlungsschritte auskommt.

Die Aufgabe wird durch die Merkmale des unabhängigen Anspruchs gelöst. Weitere vorteilhafte Ausgestaltungen werden durch die Unteransprüche beschrieben.

Zur Lösung der Aufgabe sieht die Erfindung demnach ein Verfahren zum Laserschneiden von nachfolgend unter dem Begriff Bauteil zusammengefassten Fahrzeugleuchten und/oder Bauteilen von Fahrzeugleuchten, insbesondere Lichtscheiben von Fahrzeugleuchten vor.

Das Verfahren sieht vor, einen von einer Laserlichtquelle ausgehenden Laserstrahl auf ein Bauteil zu richten und den Auftreffpunkt des Laserstrahls auf einer Oberflächenpartie des Bauteils entlang einer auszubildenden Schnittlinie einer herzustellenden Schnittkante zu führen.

Die Schnittkante setzt sich zusammen aus:
- einer Schnittlinie, welche entlang einer dem Auftreffpunkt des von der Laserlichtquelle ausgehenden Laserstrahls zugewandten Oberflächenpartie eines zu beschneidenden Bauteils verläuft, und
- einer sich aus der Sicht des Auftreffpunkts des Laserstrahls gesehen an diese Schnittlinie anschließenden Schnittfläche, die sich bei einem vollständigen Schnitt von der Schnittlinie auf der dem Auftreffpunkt des von der Laserlichtquelle ausgehenden Laserstrahls zugewandten Oberflächenpartie ausgehend durch die gesamte Dicke des Bauteils hindurch erstreckt.

In einem in einer normal zur Schnittlinie liegenden Ebene verlaufenden Querschnitt durch das Bauteil hindurch schließt sich die Schnittfläche unter einem Winkel an eine an der Schnittlinie an die dem Auftreffpunkt des von der Laserlichtquelle ausgehenden Laserstrahls zugewandte Oberflächenpartie angelegte Tangente an.

Beim Stand der Technik handelt es sich hierbei um einen rechten Winkel.

Das Verfahren zeichnet sich dadurch aus, dass bei einer Betrachtung in mindestens einem in einer normal zur Schnittlinie liegenden Ebene verlaufenden Querschnitt durch das Bauteil die Tangente an die dem Auftreffpunkt des von der Laserlichtquelle ausgehenden Laserstrahls zugewandte Oberflächenpartie und die Schnittfläche aus Sicht der Schnittlinie zum Bauteil hin einen stumpfen Winkel einschließen.

Mit anderen Worten schließen die Schnittfläche und die Oberflächenpartie, auf der die Schnittlinie, auf der dem Auftreffpunkt des von der Laserlichtquelle ausgehenden Laserstrahls zugewandten Oberfläche des Bauteils verläuft, bauteilseitig einen stumpfen Winkel ein.

Der stumpfe Winkel beträgt zwischen 90° und 180°. Bevorzugt beträgt der stumpfe Winkel 105° bis 165, besonders bevorzugt 112,5° bis 157,5°.

Die dem Auftreffpunkt des von der Laserlichtquelle ausgehenden Laserstrahls zugewandte Oberflächenpartie kann auf einer vorderen oder rückwärtigen Oberfläche eines Bauteils liegen.

Die dem Auftreffpunkt des von der Laserlichtquelle ausgehenden Laserstrahls zugewandte Oberfläche des Bauteils befindet sich bevorzugt auf einer einem Betrachter beim Umgang mit einer fertigen Fahrzeugleuchte zugewandten Seite. Bei einem entsprechenden Umgang kann es sich um eine Betrachtung eines in Betrieb befindlichen Fahrzeugs von einem anderen Verkehrsteilnehmer aus, oder um einen Einbau oder Austausch einer Fahrzeugleuchte bei einer Herstellung oder einer Reparatur oder Wartung eines Fahrzeugs handeln, um ohne Anspruch auf Vollständigkeit nur einige denkbare Ausgestaltungen eines Umgangs mit einer fertigen Fahrzeugleuchte zu nennen.

Besonders bevorzugt fällt die dem Auftreffpunkt des von der Laserlichtquelle ausgehenden Laserstrahls zugewandte Oberfläche des Bauteils in einem normal zur Schnittlinie verlaufenden Querschnitt durch das Bauteil hindurch gesehen zumindest im Bereich der Oberflächenpartie vom Zentrum des Bauteils zu dessen Rand hin ab.

Dabei ist in einem normal zur Schnittlinie verlaufenden Querschnitt durch das Bauteil hindurch gesehen ein zwischen einer die Schnittlinie schneidenden Flächennormalen der Oberflächenpartie und der Schnittfläche bauteilseitig eingeschlossener Winkel größer, als ein zwischen einer Flächennormalen im Zentrum des Bauteils und der Schnittfläche bauteilseitig eingeschlossener Winkel.

Das Bauteil kann in einem normal zur Schnittlinie verlaufenden Querschnitt durch das Bauteil einen gekrümmten Verlauf seiner dem Auftreffpunkt des von der Laserlichtquelle ausgehenden Laserstrahls zugewandten Oberfläche aufweisen, wobei der zwischen einer Flächennormalen und der Schnittfläche bauteilseitig eingeschlossener Winkel mit zunehmendem Abstand vom Zentrum des Bauteils zunimmt, oder umgekehrt betrachtet, mit zunehmendem Abstand vom Rand des Bauteils abnimmt.

Bei der dem Auftreffpunkt des von der Laserlichtquelle ausgehenden Laserstrahls zugewandten Oberflächenpartie kann es sich demnach in wenigstens einem normal zur Schnittlinie verlaufenden Querschnitt durch das Bauteil um mindestens einen Endabschnitt einer beispielsweise vorderen oder rückwärtigen Oberfläche eines Bauteils handeln.

Die dem Auftreffpunkt des von der Laserlichtquelle ausgehenden Laserstrahls zugewandte Oberflächenpartie liegt demnach bevorzugt in wenigstens einem Endabschnitt einer beispielsweise vorderen oder rückwärtigen Oberfläche eines Bauteils in einem normal zur Schnittlinie verlaufenden Querschnitt durch das Bauteil gesehen.

Innerhalb eines Endabschnitts kann in einem normal zur Schnittlinie verlaufenden Querschnitt ein zwischen einer Flächennormalen zur Oberflächenpartie der dem Auftreffpunkt des von der Laserlichtquelle ausgehenden Laserstrahls zugewandten Oberfläche und der Schnittfläche eingeschlossener Winkel konstant sein, oder zum Rand hin stetig zunehmen.

Die beispielsweise vordere oder rückwärtige, dem Auftreffpunkt des von der Laserlichtquelle ausgehenden Laserstrahls zugewandte Oberfläche des Bauteils kann demnach im Bereich des Laserzuschnitts mit einer konstanten Schrägstellung, wie etwa einer Phase und/oder mit einer mit zunehmendem Abstand vom Zentrum der Lichtscheibe zunehmenden Schrägstellung, wie etwa einem Radius oder einem Parabel- oder Hyperbelverlauf versehen sein.

Die beispielsweise als ein Endabschnitt einer beispielsweise vorderen oder rückwärtigen Oberfläche eines Bauteils ausgeführte, dem Auftreffpunkt des von der Laserlichtquelle ausgehenden Laserstrahls zugewandte Oberflächenpartie kann entlang der Schnittlinie gesehen eine gleichbleibende oder eine veränderliche Schrägstellung in Bezug zu wenigstens einem Abschnitt der verbleibenden, in Bezug auf den Auftreffpunkt des von der Laserlichtquelle ausgehenden Laserstrahls beispielsweise vorderen oder rückwärtigen, beispielsweise gekrümmten Oberfläche des Bauteils in wenigstens einem normal zur Schnittlinie verlaufenden Querschnitt durch das Bauteil gesehen aufweisen.

Der mindestens eine Endabschnitt kann in Bezug zu wenigstens einem Abschnitt der verbleibenden, in Bezug auf den Auftreffpunkt des von der Laserlichtquelle ausgehenden Laserstrahls beispielsweise vorderen oder rückwärtigen, beispielsweise gekrümmten Oberfläche des Bauteils in wenigstens einem normal zur Schnittlinie verlaufenden Querschnitt durch das Bauteil in einer oder in mehreren unterschiedlichen Richtungen schräg angeordnet sein.

Beispielsweise können in Bezug zu wenigstens einem Abschnitt der verbleibenden, in Bezug auf den Auftreffpunkt des von der Laserlichtquelle ausgehenden Laserstrahls beispielsweise vorderen oder rückwärtigen, beispielsweise gekrümmten Oberfläche des Bauteils in wenigstens einem normal zur Schnittlinie verlaufenden Querschnitt durch das Bauteil jeweilige gegenüberliegende Endabschnitte in unterschiedlichen Richtungen schräg angeordnet sein.

Die Schnittfläche kann in Bezug auf die Endabschnitte einer beispielsweise vorderen oder rückwärtigen Oberfläche so schräg stehen, dass in wenigstens einem normal zur Schnittlinie verlaufenden Querschnitt durch das Bauteil ein Winkel zwischen einer Bezugslinie, welche durch das Bauteil hindurchgeht und gleiche Winkel in Bezug auf die jeweiligen Endabschnitte der beispielsweise vorderen oder rückwärtigen Oberfläche ausbildet, und einer Linie senkrecht zu jedem der Endabschnitte der beispielsweise vorderen oder rückwärtigen Oberfläche kleiner ist, als ein Winkel zwischen der Bezugslinie und einer Linie senkrecht zu der Schnittfläche.

Das Verfahren kann vorsehen, dass die Schnittfläche in wenigstens einem normal zur Schnittlinie verlaufenden Querschnitt durch das Bauteil in mindestens einem Endabschnitt parallel zu einer Bezugslinie verläuft, welche durch das Bauteil hindurchgeht und gleiche Winkel in Bezug auf die jeweiligen Endabschnitte der beispielsweise vorderen oder rückwärtigen Oberfläche ausbildet.

Gemäß einer bevorzugten Ausgestaltung der Erfindung handelt es sich bei dem Bauteil um eine Lichtscheibe einer Fahrzeugleuchte mit einem von einem Leuchtengehäuse und der Lichtscheibe zumindest teilweise umschlossenen Leuchteninnenraum. Die Lichtscheibe verschließt an der fertigen Fahrzeugleuchte wenigstens eine Öffnung des Leuchtengehäuses. Die Lichtscheibe kann an der fertigen Fahrzeugleuchte beispielsweise durch Laserschweißen mit dem Leuchtengehäuse verbunden sein. Die Lichtscheibe kann eine gekrümmte, an der fertigen Fahrzeugleuchte dem Leuchteninnenraum abgewandte, vordere Oberfläche und eine dieser gegenüberliegende, rückwärtige Oberfläche aufweisen. An der rückwärtigen Oberfläche und/oder mindestens einer die vordere Oberfläche und die rückwärtige Oberfläche miteinander verbindenden Schmalseite kann mindestens ein Schweißflächenabschnitt vorgesehen sein, entlang dem die Lichtscheibe der fertigen Fahrzeugleuchte mit dem Leuchtengehäuse mittels Laserschweißens verbunden sein kann.

In zumindest einem Abschnitt der Lichtscheibe können jeweilige Endabschnitte der gekrümmten vorderen Oberfläche entsprechend dem Schweißflächenabschnitt in unterschiedlichen Richtungen schräg angeordnet sein.

Die Schweißflächenabschnitte bilden einen Schweißflächenverlauf, der in jedem normal zur Schnittlinie verlaufenden Querschnitt durch das Bauteil parallel zu einem durch Randflächenabschnitte einer eine an der fertigen Fahrzeugleuchte durch die Lichtscheibe verschlossene Lichtöffnung umgebenden Wandung eines Leuchtengehäuses gebildeten Randflächenabschnittverlauf liegt.

Das Bauteil besteht vorzugsweise aus einem Kunststoff.

Bei dem Bauteil handelt es sich besonders bevorzugt um eine Lichtscheibe einer Fahrzeugleuchte.

Das Material der Lichtscheibe ist vorzugsweise ein Polymethylmethacrylat (PMMA). PMMA kann beispielsweise mittels einer CO2-Laserquelle geschnitten werden. Auch andere Laserquellen sind denkbar, welche Wellenlängen im Bereich von 800 nm bis 1 mm zu erzeugen in der Lage sind, ebenso wie grundsätzlich andere Materialien als PMMA für die Lichtscheibe denkbar sind.

Das Zuschneiden erfolgt besonders bevorzugt als 3D-Laserbeschnitt vermittels 3D-Laserschneiden.

Die Führung des Auftreffpunkts des Laserstrahls auf einer Oberfläche des Bauteils entlang einer auf der Oberfläche auszubildenden Schnittlinie einer herzustellenden Schnittkante kann durch Relativbewegung von Laserlichtquelle und Bauteil erfolgen.

Das Verfahren kann beispielsweise vorsehen, das Bauteil ortsfest oder beweglich zu halten.

Beispielsweise kann das Verfahren vorsehen, die Laserlichtquelle translatorisch und/oder rotatorisch im Raum zu bewegen, um den Auftreffpunkt des Laserstrahls und das Bauteil entlang einer Schnittlinie einer herzustellenden Schnittkante relativ zueinander zu bewegen.

Die Bewegung der Laserlichtquelle kann beispielsweise in einer, in zwei oder in drei voneinander in mathematischem Sinne unabhängigen Richtungen translatorisch im Raum vorgesehen sein.

Alternativ oder zusätzlich kann die Bewegung der Laserlichtquelle beispielsweise um eine, zwei oder drei voneinander in mathematischem Sinne unabhängigen Achsen rotatorisch im Raum vorgesehen sein.

Die Bewegung der Laserlichtquelle im Raum kann hierbei entlang einer der herzustellenden Schnittkante in mathematischem Sinne ähnlichen Bahnkurve erfolgen.

In der ein Teilgebiet der Mathematik darstellenden Geometrie sind zwei Figuren genau dann zueinander ähnlich, wenn sie durch eine häufig als Ähnlichkeit bezeichnete Ähnlichkeitsabbildung ineinander überführt werden können. Im Sinne der vorliegenden Erfindung sind die Bahnkurve, entlang welcher die auf die Schnittlinie der herzustellenden Schnittkante ausgerichtete Laserlichtquelle im Raum bewegt wird, und der Verlauf der herzustellenden Schnittkante ähnlich, wenn eine geometrische Abbildung existiert, die sich aus zentrischen Streckungen und Kongruenzabbildungen, wie beispielsweise Verschiebungen, Drehungen, Spiegelungen zusammensetzen lässt und die Bahnkurve auf die herzustellende Schnittkante abbildet. Winkel und Streckenverhältnisse stimmen bei durch die Bahnkurve und die herzustellende Schnittkante gebildeten, ähnlichen Figuren überein. Ähnlichkeit erweitert somit die Kongruenz um die Möglichkeit der Streckung.

Die Führung des Auftreffpunkts des Laserstrahls auf einer Oberfläche des Bauteils entlang einer auf der Oberfläche auszubildenden Schnittlinie einer herzustellenden Schnittkante kann alternativ oder zusätzlich durch eine ein- oder mehrmalige Umlenkung des von der Laserlichtquelle ausgehenden Laserstrahls bis zu seinem Auftreffpunkt auf der Oberfläche des Bauteils erfolgen, wobei der Ort und/oder die Richtung zumindest einer Umlenkung, beispielsweise einer entlang des Laserstrahls ausgehend von der Laserlichtquelle letzten Umlenkung vor dem Erreichen des Bauteils gesehen letzten Umlenkung veränderlich sein können.

Eine denkbare Ausgestaltung des Verfahrens kann vorsehen, eine Laserlichtquelle in drei voneinander in mathematischem Sinne unabhängigen Richtungen translatorisch und um drei voneinander in mathematischem Sinne unabhängigen Achsen rotatorisch im Raum zu bewegen.

Das Verfahren kann ferner vorsehen, den von der Laserlichtquelle ausgehenden Laserstrahl auf eine herzustellende Schnittkante eines ortsfest gehaltenen Bauteils einer Fahrzeugleuchte umzulenken.

Das Verfahren kann dadurch weitergebildet sein, dass der Ort der Umlenkung des Laserstrahls einerseits entlang einer dem Verlauf der herzustellenden Schnittkante in mathematischem Sinne ähnlichen, ortsfesten Bahnkurve mechanisch geführt ist, und andererseits in genau einer Richtung entlang eines Abschnitts des Verlaufs des von der Laserlichtquelle ausgehenden Laserstrahls zum Ort der Umlenkung gegenüber der Laserlichtquelle im Bereich diesen Abschnitts des Laserstrahls beweglich angeordnet ist.

Die Bewegung der Laserlichtquelle im Raum führt damit den Ort der Umlenkung des Laserstrahls auf die herzustellende Schnittkante des Bauteils der Fahrzeugleuchte entlang der der herzustellenden Schnittkante in mathematischem Sinne ähnlichen Bahnkurve.

Ungenauigkeiten der Bewegung der Laserlichtquelle im Raum haben dabei keine oder eine nur geringe Auswirkung auf den Verlauf der herzustellenden Schnittkante.

Die mechanische Führung des Orts der Umlenkung erfolgt damit lediglich lokal normal zur ortsfesten Bahnkurve, wohingegen die Bewegung des Orts der Umlenkung entlang der ortsfesten Bahnkurve, bevorzugt ebenso die Neigung des Orts der Umlenkung um eine die ortsfeste Bahnkurve lokal tangierende Achse durch die Bewegung der Laserlichtquelle im Raum gesteuert erfolgt.

Dadurch kann die Umlenkung in konstantem Winkel stattfinden.

Der Laserstrahl kann am Ort der Umlenkung um 90° umgelenkt werden.

Der Laserstrahl kann zwischen der Laserlichtquelle und dem mechanisch entlang der einer herzustellenden Schnittkante in mathematischem Sinne ähnlichen ortsfesten Bahnkurve geführten Ort der Umlenkung ein weiteres mal oder öfters umgelenkt werden, vorzugsweise unter dem selben Winkel wie am Ort der Umlenkung, bevorzugt jedoch in einer der Umlenkung am Ort der Umlenkung entgegengesetzten Richtung. Hierdurch kann ein besonders kompakter Aufbau einer Vorrichtung zur Durchführung des Verfahrens erhalten werden, bei dem die Laserlichtquelle grundsätzlich auf das zu beschneidende Bauteil gerichtet im Raum geführt wird, der Laserstrahl aber zunächst in einer Richtung zum Ort der Umlenkung umgeleitet wird, in welcher Richtung der Ort der Umlenkung beweglich gegenüber der Laserlichtquelle angeordnet beziehungsweise beweglich mit der Laserlichtquelle verbunden ist. Am Ort der Umlenkung findet wiederum die Umlenkung des Laserstrahls auf die herzustellende Schnittkante am zu beschneidenden Bauteil statt.

In Bezug auf den Verlauf des Laserstrahls ausgehend von der Laserlichtquelle kann entlang eines Abschnitts des Laserstrahls vor der weiteren Umlenkung eine zusätzliche Beweglichkeit vorgesehen sein, die wiederum eine Bewegung nur in Richtung parallel zum Verlauf des Laserstrahls in dem entsprechenden Abschnitt zulässt.

Das Verfahren kann demnach wenigstens vorsehen, den von der Laserlichtquelle ausgehenden Laserstrahl nicht direkt auf eine an einem von der Laserlichtquelle beabstandeten, ortsfesten, zu beschneidenden Bauteil einer Fahrzeugleuchte herzustellende Schnittkante zu richten, sondern auf eine Umlenkeinrichtung, die entlang einer von der Führung der Laserlichtquelle im Raum unabhängigen, der herzustellenden Schnittkante in mathematischem Sinne ähnlichen, beispielsweise durch eine Kulissenführung gebildete Bahnkurve mechanisch geführt ist. Die Neigung der Umlenkeinrichtung zu einem lokalen Abschnitt der Bahnkurve ebenso wie der Fortschritt der Bewegung der Umlenkeinrichtung entlang der Bahnkurve wird durch die Bewegung der Laserlichtquelle im Raum gesteuert. Die Laserlichtquelle und die Umlenkeinrichtung sind hierzu in einer parallel zu einem im Verlauf des Laserstrahls ausgehend von der Laserlichtquelle vor der Umlenkung an der Umlenkeinrichtung liegenden Abschnitt des Laserstrahls verlaufenden Richtung relativ zueinander beweglich miteinander verbunden, wohingegen Bewegungen in einer anderen Richtung, als der parallel zu dem im Verlauf des Laserstrahls ausgehend von der Laserlichtquelle vor der Umlenkung an der Umlenkeinrichtung liegenden Abschnitt des Laserstrahls verlaufenden Richtung ausgeschlossen sind.

Das Verfahren kann vorsehen, die Laserlichtquelle vermittels eines Manipulators translatorisch und rotatorisch im Raum zu bewegen.

Das Verfahren kann vorsehen, die Laserlichtquelle an einem vermittels eines Manipulators in drei voneinander in mathematischem Sinne unabhängigen Richtungen im Raum translatorisch und um drei voneinander in mathematischem Sinne unabhängigen Achsen rotatorisch beweglich angetriebenen Manipulatorkopf zu führen.

Das Verfahren zum Laserschneiden von Bauteilen kann aufbauend auf EP 2 664 496 A1 oder generell beim Laserzuschnitt von Fahrzeugleuchten und/oder Bauteilen von Fahrzeugleuchten, insbesondere Lichtscheiben von Fahrzeugleuchten angewandt werden.

Dementsprechend sieht eine vorteilhafte Ausgestaltung der Erfindung eine Verringerung der Toleranzen von Fahrzeugheckleuchten und deren Lichtscheiben vermittels 3D-Laserschneidens vor, indem zunächst die Fahrzeugleuchte mit einem von einem Leuchtengehäuse und einer Lichtscheibe umschlossenen Leuchteninnenraum und darin beherbergt zumindest einem Leuchtmittel mit wenigstens einer Lichtquelle durch Verbinden von Lichtscheibe und Leuchtengehäuse fertig gestellt wird und im Anschluss hieran die in Übermaß hergestellte Lichtscheibe auf ein eizuhaltendes Maß per Laserzuschnitt beschnitten wird. Das Leuchtengehäuse weist hierbei auf seiner einer im fertigen Zustand der Fahrzeugleuchte durch die Lichtscheibe verschlossenen Öffnung abgewandten Seite Verbindungsmittel auf, welche mit den in der Aufnahmeöffnung eines Fahrzeugs vorgesehenen Befestigungsmitteln korrespondieren. Die Verbindungsmittel und die Befestigungsmittel geben dabei ein absolut einzuhaltendes Maß für den Einbau der fertigen Fahrzeugleuchte in die Aufnahmeöffnung vor. Die Lichtscheibe ist in Übermaß ausgeführt, wobei die Lichtscheibe die von den die der Lichtscheibe zugewandte Öffnung des Gehäuses umgebenden Wandungen aufgespannte Fläche überlappt. Die fertig zusammengebaute Fahrzeugleuchte wird nunmehr in einer Befestigungsvorrichtung angeordnet, und anschließend wird die durch den Verlauf der die am Fahrzeug vorgesehenen Aufnahmeöffnung umgebenden Wandungen gegebene Kontur der Aufnahmeöffnung gegebenenfalls unter Einhaltung eines konstanten Spaltmaßes zwischen der Lichtscheibe und dem Rand der Aufnahmeöffnung vermittels 3D-Laserschneiden auf die zunächst im Übermaß ausgeführte Lichtscheibe der Fahrzeugleuchte übertragen.

Das Verfahren zum Laserschneiden von Bauteilen kann demnach vorteilhaft in Verbindung mit einem Herstellungsverfahren zur Herstellung von Fahrzeugleuchten mit einem von einer Lichtscheibe und einem Leuchtengehäuse umschlossenen, zumindest ein Leuchtmittel mit wenigstens einer Lichtquelle beherbergenden Leuchteninnenraum angewandt werden.

Das Leuchtengehäuse einer gemäß einem solchen Herstellungsverfahren hergestellten Fahrzeugleuchte weist zumindest eine Lichtöffnung für einen Lichtaustritt wenigstens einer Lichtquelle des mindestens einen Leuchtmittels aus dem Leuchteninnenraum auf. An der fertigen Fahrzeugleuchte ist die mindestens eine Lichtöffnung von der Lichtscheibe verschlossen.

Die Lichtscheibe ist durch eine transparente Abdeckung gebildet, welche den Leuchteninnenraum sowie die von diesem beherbergten Bauteile gegen Witterungseinflüsse schützt. Die Abdeckung ist hierbei wenigstens in einem für das menschliche Auge sichtbarer Bereich transparent.

Wenigstens eine Wandung des Leuchtengehäuses umgibt die Lichtöffnung. Die Wandung weist eine der umgebenen Lichtöffnung zugewandte Innenoberfläche und eine der umgebenen Lichtöffnung abgewandte Außenoberfläche auf. Eine um die Lichtöffnung umlaufende Randfläche grenzt entlang eines Innenrands an die Innenoberfläche und entlang eines Außenrands an die Außenoberfläche an und verbindet zwischen Innenrand und Außenrand die Innenoberfläche und die Außenoberfläche. Der Innenrand spannt eine Fläche der Lichtöffnung auf. Die Kontur des um die Lichtöffnung umlaufenden Innenrands der Randfläche widerspiegelt den Flächenverlauf der Lichtöffnung.

Die Randfläche setzt diesen Flächenverlauf vom Innenrand zum Außenrand fort.

Der Flächenverlauf kann eben oder zweidimensional gewölbt, wobei ein Schnitt in einer Richtung durch den Flächenverlauf eine Gerade bildet, oder dreidimensional gekrümmt verlaufen, wo sich kein Schnitt mit einem geraden Verlauf findet.

An dem Leuchtengehäuse ist mindestens ein Aufnahmepunkt zur Befestigung mindestens einer Befestigungsvorrichtung vorgesehen.

Das Herstellungsverfahren, in dessen Zusammenhang das Verfahren zum Laserschneiden von Bauteilen angewandt werden kann, sieht zunächst die Bestückung des in eine oder mehrere Leuchtenkammern unterteilten, mindestens eine von einer Lichtscheibe zu verschließenden Lichtöffnung aufweisenden Leuchtengehäuses mit den im Leuchteninnenraum beherbergten Einrichtungen und Bauteilen, wie etwa mindestens einem Leuchtmittel mit wenigstens einer Lichtquelle einschließlich deren elektrischer Kontaktierung, gegebenenfalls zumindest einem mindestens einer Lichtquelle wenigstens eines Leuchtmittels zugeordnetem Reflektor, gegebenenfalls einer oder mehrerer Optikscheiben sowie gegebenenfalls weiteren erforderlichen Elementen vor. Die Bestückung mit einem Reflektor kann wahlweise durch Beschichtung zumindest eins Teils der dem Leuchteninnenraum zugewandten Innenseite des Leuchtengehäuses mit einer reflektierenden Beschichtung erfolgen.

Die Fahrzeugleuchte kann dabei mit allen oder nur einem Teil der nachfolgend erwähnten Einrichtungen, Bauteile, Elektronikbauteile etc. ausgestattet sein, dementsprechend das Leuchtengehäuse mit diesen entsprechend bestückt werden kann.

So können wenigstens einer Lichtquelle des Leuchtmittels ein oder mehrere Optikelemente, wie etwa mindestens eine Linse, mindestens ein Rinnenkonzentrator, z.B. mindestens eine Parabolrinne (CPC; Compound Parabolic Concentrator) oder dergleichen zur Ausformung einer definierten Abstrahlcharakteristik zugeordnet sein.

In dem Leuchteninnenraum kann im Strahlengang zwischen wenigstens einer Lichtquelle des Leuchtmittels und der Lichtscheibe wenigstens eine Optikscheibe angeordnet sein, welche beispielsweise eine bestimmte Struktur und/oder Maskierung aufweisen kann, etwa um bei einer klaren, beispielsweise für einen Betrachter eine Tiefenwirkung bewirkenden Lichtscheibe das Leuchtmittel und/oder dessen mindestens eine Lichtquelle zu kaschieren. Das Leuchtengehäuse bzw. der Leuchteninnenraum kann in mehrere Leuchtenkammern mit jeweils eigenen Lichtquellen und/oder Leuchtmitteln, eventuell Reflektoren und/oder Optikelementen und/oder Optikscheiben, sowie gegebenenfalls Lichtscheiben unterteilt sein, von denen mehrere oder alle Leuchtenkammern gleiche oder jede Leuchtenkammer eine andere Lichtfunktionen erfüllen kann.

Bei einer Lichtfunktion handelt es sich dabei um eine durch Abstrahlung von Licht einer bestimmten Farbe in einer bestimmten Helligkeit und Richtung verwirklichte, zur Erfüllung einer Aufgabe vorgesehene Funktion der Fahrzeugleuchte. Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte speziell bei Fahrzeugen eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer auch als Schlusslichtfunktion bezeichneten Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte. Beispiele für Fahrzeugleuchten im Automobilbereich sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Ein Leuchtmittel für wenigstens eine Lichtfunktion umfasst zumindest wenigstens eine Lichtquelle, beispielsweise mindestens eine Glühlampe oder mindestens eine Gasentladungslampe oder mindestens eine Leuchtdiode sowie gegebenenfalls Kombinationen hiervon.

Beispielsweise kommen als Lichtquellen von Leuchtmitteln für Fahrzeugleuchten vermehrt anorganische Leuchtdioden oder organische Leuchtdioden zum Einsatz.

Anorganische Leuchtdioden bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Fahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Mit anderen Worten weisen LEDs bei gleicher Lichtstärke einen im Vergleich zu anderen Lichtquellen geringeren Stromverbrauch auf. Hierdurch kann bei einer Verwendung einer oder mehrerer LEDS als Lichtquelle eines Leuchtmittels beispielsweise in einer Fahrzeugleuchte die Belastung eines zur Stromversorgung vorgesehenen Bordnetzes eines Fahrzeugs verringert werden, einhergehend mit Einsparungen beim Energieverbrauch des Fahrzeugs. Ferner weisen LEDs eine weit höhere Lebensdauer auf, als andere, zur Anwendung in einer Fahrzeugleuchte in Frage kommende Lichtquellen. Durch die längere Lebensdauer wird unter Anderem durch die geringere Ausfallquote die Betriebssicherheit und damit einhergehend die Qualität der Fahrzeugleuchte erhöht.

Eine kurz als OLED (Organic Light Emitting Diode; OLED) bezeichnete organische Leuchtdiode ist ein leuchtendes Dünnschichtbauelement aus organischen halbleitenden Materialien mit mindestens einer zwischen elektrisch leitenden, beispielsweise metallischen Schichten für Anode und Kathode eingeschlossen Emitterschicht. Die Stärke oder anders ausgedrückt Dicke der Schichten liegt in einer Größenordnung von etwa 100 nm. Zum Schutz gegen Wasser, Sauerstoff sowie zum Schutz gegen andere Umwelteinflüsse, wie etwa Kratzbeschädigung und/oder Druckbelastung sind OLEDs typischerweise mit einem anorganischen Material insbesondere mit Glas verkapselt. Zwar gibt es Anstrengungen, das Glas durch Kunststoff zu ersetzen, die jedoch noch nicht vom gewünschten Erfolg gekrönt sind, weil die Dichtigkeit der alternativen Materialien für die Verkapselung nicht ausreichend gut genug ist.

Im Unterschied zu anorganischen Leuchtdioden benötigen OLEDs keine einkristallinen Materialien. Im Vergleich zu LEDs lassen sich OLEDs daher in kostengünstiger Dünnschichttechnik herstellen. OLEDs ermöglichen dadurch die Herstellung flächiger Lichtquellen, die einerseits sehr dünn und andererseits als durch die Lichtscheibe einer Fahrzeugleuchte hindurch sichtbare leuchtende Fläche eingesetzt einen besonders homogenes Erscheinungsbild aufweisen.

Zum Betrieb sowohl von von LEDs, als auch von OLEDs als Lichtquellen für ein Leuchtmittel beispielsweise einer Fahrzeugleuchte können eine oder mehrere mehr oder minder komplexe elektronische Steuerschaltungen vorgesehen sein, die beispielsweise auf einem oder mehreren Leuchtmittelträgern des Leuchtmittels angeordnet und in dem Leuchteninnenraum beherbergt sein können.

Ein einfaches Beispiel für eine elektronische Steuerschaltung betrifft die Angleichung unterschiedlicher Helligkeiten einzelner LEDs oder von LED-Strängen innerhalb einer Gruppe gemeinsam betriebener, auf einem oder mehreren Leuchtmittelträgern angeordneter LEDs. Eine solche elektronische Steuerschaltung besteht aus mindestens einem oder mehreren Vorwiderständen zur Anpassung der Vorwärtsspannung der LEDs an das Bordnetz. Beispielsweise ist bekannt, die LEDs im so genannten Binning nach Vorwärtsspannung und Intensität zu sortieren. Um Unterschiede zwischen mehreren LED-Strängen auszugleichen, die jeweils aus in Reihe geschalteten LEDs gleicher Vorwärtsspannung und Intensität bestehen, und um eine homogene Helligkeitsverteilung der benachbarten LED-Stränge aus LEDs mit unterschiedlicher Vorwärtsspannung und Intensität zu erhalten, wird zumindest jeder LED-Strang mit einem anderen Vorwiderstand versehen.

LEDs sowie OLDEs bedürfen darüber hinaus beim Einsatz als Lichtquelle insbesondere in Fahrzeugleuchten oft einer separaten Ausfallerkennung. Dies ist bedingt durch die geringe Leistungsaufnahme von LEDs und OLEDs im Allgemeinen. Beispielsweise ist ein in einem Fahrzeug untergebrachtes Steuergerät nicht in der Lage, eine dem Ausfall einer oder weniger LEDs oder OLEDs entsprechende Änderung der Leistungsentnahme aus dem Bordnetz zu erkennen, da eine hieraus resultierende Bordnetzspannungsänderung unterhalb der im normalen Betrieb eines Fahrzeugs auftretenden Bordnetzspannungssschwankungen liegt. Eine beispielsweise in der Fahrzeugleuchte untergebrachte elektronische Schaltungsanordnung zur Ausfallerkennung erfasst den Ausfall einer oder mehrerer Leuchtdioden in der Fahrzeugleuchte z.B. mittels eines oder mehrerer Komparatoren und teilt dies dem Steuergerät mit. Diese elektronische Schaltungsanordnung zur Ausfallerkennung kann durch eine beispielsweise auf dem Leuchtmittelträger aufgebrachte elektronische Steuerschaltung verwirklicht sein.

Darüber hinaus können sowohl LEDs, als auch OLEDs weiterer elektronischer Steuerschaltungen bedürfen. Beispiele hierfür sind elektronische Steuerschaltungen:
- zur Regelung und/oder Steuerung der Helligkeit bzw. Leuchtkraft der LEDs und/oder OLEDs, beispielsweise durch eine pulsweitenmodulierte Taktung der Stromversorgung für einen außerhalb des für das menschliche Auge wahrnehmbaren Bereichs gepulsten Betrieb,
- zur Kompensation oder Vermeidung elektromagnetischer Störungen, beispielsweise aufgebaut aus Kondensatoren und/oder Ferriten,
- zum Schutz der LEDs und/oder OLEDs z.B. vor einer Überspannung des Bordnetzes oder vor fehlerhafter Polung, beispielsweise umfassend eine oder mehrere Zenerdioden,

Zusammengefasst muss für fast alle LED- und/oder OLED-Anwendungen eine mehr oder minder umfangreiche, für die speziellen LEDs und/oder OLEDs ausgelegte elektronische Steuerschaltung z.B. auf den mindestens einen Leuchtmittelträger aufgebracht werden. Die elektronische Steuerschaltung umfasst im einfachsten Fall einen Vorwiderstand und eine Schutzdiode, kann aber je nach Anwendung auch wesentlich mehr Elektronikbauteile enthalten, wie z.B. Mikrokontroller bzw. Kontroller, Komparatoren, Transistoren, Schutzdioden, elektrische Widerstände z.B. als Vorwiderstand, Kondensatoren, Ferrite, etc.

Das Herstellungsverfahren, in dessen Zusammenhang das Verfahren zum Laserschneiden von Bauteilen angewandt werden kann, sieht darüber hinaus vor, eine gemäß dem Flächenverlauf der Lichtöffnung geformte Lichtscheibe der Fahrzeugleuchte in einem Übermaß herzustellen, so dass die Lichtscheibe in auf der Randfläche aufgelegtem Zustand nicht nur auf der Randfläche aufliegt, sondern in mindestens einer Richtung über den Außenrand der Randfläche übersteht und damit die Randfläche in Richtung von der Lichtöffnung weg über die Außenoberfläche hinaus überragt.

Besonders bevorzugt wird die Lichtscheibe so hergestellt, dass sie die Lichtscheibe allseitig den Außenrand und damit die Randfläche in Richtung von der Lichtöffnung weg überragt. Mit anderen Worten steht die Lichtscheibe vorzugsweise in mehr als einer Richtung, besonders bevorzugt allseitig über den Außenrand der Randfläche über.

Anschließend wird der Leuchteninnenraum verschlossen, indem die Lichtscheibe auf der Randfläche aufliegend mit dem Leuchtengehäuse beispielsweise durch Kleben, Verschweißen, wie etwa Laserschweißen, odgl. vorzugsweise stoffschlüssig verbunden wird, wobei die Lichtscheibe in einer oder mehreren, vorzugsweise allem Richtungen über den Außenrand übersteht.

Gegebenenfalls können nun ein oder mehrere erste Befestigungselemente mindestens einer zur Befestigung der Fahrzeugleuchte in einer Einbauöffnung eines Karosserieteils oder einer Karosserie eines Fahrzeugs vorgesehenen Befestigungsvorrichtung an den hierfür vorgesehenen Aufnahmepunkten am Leuchtengehäuse angebracht werden.

Alternativ oder zusätzlich können weitere Behandlungsschritte, wie beispielsweise Polieren der Lichtscheibe und/oder Temperprozesse, beispielsweise zum Relaxieren der Lichtscheibe und /oder Qualitätsprüfungen etc. der mit der im Übermaß hergestellten Lichtscheibe versehenen Fahrzeugleuchte vorgenommen werden.

Die Fahrzeugleuchte wird dann entsprechend ihrer Anordnung in einer Einbauöffnung lagegenau in eine Aufnahme eingebracht, vorzugsweise eingelegt.

Das lagegenaue Einbringen der Fahrzeugleuchte in der Aufnahme unter gleichzeitiger positions- und verdrehgenauer Ausrichtung erfolgt vorzugsweise unter Verwendung der als Fixpunkte dienenden Aufnahmepunkte am Leuchtengehäuse oder über die gegebenenfalls bereits montierten ersten Befestigungselemente, welche die tatsächliche Ausrichtung und Lage der Fahrzeugleuchte relativ zu dem einen oder den mehreren Aufnahmepunkten in der Einbauöffnung widerspiegeln.

Bevorzugt kann die Fahrzeugleuchte dabei vorzugsweise über die Aufnahmepunkte oder die gegebenenfalls bereits montierten ersten Befestigungseinrichtungen in der Aufnahme ausgerichtet und gehalten werden.

Um eine maximal mögliche präzise Erfüllung von Toleranzvorgaben insgesamt und insbesondere beim späteren Einbau in der Einbauöffnung zu erhalten, wird im Anschluss die über den Außenrand ragende Partie der Lichtscheibe unter Bezugnahme auf die als Fixpunkte dienenden Aufnahmepunkte entsprechend den Toleranzvorgaben zugeschnitten.

Das Zuschneiden erfolgt unter Anwendung des erfindungsgemäßen Verfahrens zum Laserschneiden von Bauteilen.

Bei der Laserbearbeitung treten keine Späne oder Partikel auf, die in spanenden Bearbeitungsanlagen trotz Absauganlagen zu Verschmutzungen oder sogar zu Partikeln im Leuchteninnenraum führen können.

Nun wird die präzise bearbeitete und fertig hergestellte Fahrzeugleuchte der Aufnahme entnommen.

Sofern noch keine leuchtenseitigen ersten Befestigungselemente montiert sind, kann dies vor oder nach der Entnahme aus der Aufnahme nachgeholt werden.

Die nach deren Entnahme aus der Aufnahme vollständig zum Einbau in eine Einbauöffnung vorbereitete Fahrzeugleuchte kann anschließend einer Qualitätsprüfung unterzogen werden. Dabei kann vorzugsweise in Linie mit dem Produktionsablauf oder im Produktionsablauf untergebracht eine Vermessung stattfinden, wobei die Maßhaltigkeit der zugeschnittenen Lichtscheibe kontrolliert werden kann.

Dabei kann das Zuschneiden der Lichtscheibe anhand der in einer solchen Qualitätsprüfung kontrollierten Maßhaltigkeit der zugeschnittenen Lichtscheibe kalibiriert werden.

Im Anschluss an die Entnahme aus der Aufnahme oder im Anschluss an eine gegebenenfalls vorgesehene Qualitätsprüfung kann die nunmehr vollständig zum Einbau in die Einbauöffnung vorbereitete Fahrzeugleuchte beispielsweise direkt einer Montagelinie zum Einbau in eine Einbauöffnung zugeführt werden, oder in eine Transportverpackung eingebracht und bis zu ihrem Einbau in eine Einbauöffnung gelagert und/oder transportiert werden.

Ebenfalls ist denkbar, leuchtenseitig vorgesehene erste Befestigungselemente erst nach dem Transport der Fahrzeugleuchten zu einer Fertigungslinie für Fahrzeuge, wo die Fahrzeugleuchten in entsprechende Einbauöffnungen von Karosserieteilen bzw. Karosserien befestigt werden, zu montieren. Dies kann beispielsweise unmittelbar beim Einbau der Fahrzeugleuchten in die Einbauöffnungen erfolgen.

Es ist ersichtlich, dass eine Verringerung der Toleranzen von Fahrzeugheckleuchten und deren zunächst in einem Übermaß hergestellter, überstehend montierten Lichtscheiben vermittels 3D-Laserschneidens verwirklicht sein kann.

Dabei ist beispielsweise ein präziser 3D-Laserbeschnitt der in einem Übermaß über den Außenrand der Randfläche einer eine Lichtöffnung umgebenden Wandung eines Leuchtengehäuses überstehenden Lichtscheibe nach deren Montage durch Befestigung am und/oder Verbinden mit dem Leuchtengehäuse unter Verschluss der Lichtöffnung vorgesehen, um eine Fahrzeugleuchte herzustellen, welche besonders toleranzarm in eine hierfür vorgesehene, beispielsweise eine Aufnahmeöffnung bildenden Aussparung eines Fahrzeugs eingepasst ist.

Dies wird erreicht, indem zunächst die Fahrzeugleuchte mit einem von einem Leuchtengehäuse und einer Lichtscheibe umschlossenen Leuchteninnenraum und darin beherbergt zumindest einem Leuchtmittel mit wenigstens einer Lichtquelle durch Verbinden von Lichtscheibe und Leuchtengehäuse fertig gestellt wird.

Das Leuchtengehäuse weist hierbei auf seiner einer im fertigen Zustand der Fahrzeugleuchte durch die Lichtscheibe verschlossenen Lichtöffnung abgewandten Seite zumindest einen Aufnahmepunkt auf, welcher mit zur Befestigung in einer Einbauöffnung eines Fahrzeugs vorgesehenen Befestigungselementen einer Befestigungsvorrichtung korrespondiert. Die Aufnahmepunkte sowie ein oder mehrere wahlweise hieran befestigte Befestigungselemente geben dabei ein absolut einzuhaltendes Maß für den Einbau der fertigen Fahrzeugleuchte in die Einbauöffnung vor.

Die Lichtscheibe ist hierbei in Übermaß ausgeführt, wobei die Lichtscheibe die von den die der Lichtscheibe zugewandte Lichtöffnung des Leuchtengehäuses umgebende bzw. umgebenden Wandungen aufgespannte Fläche überragt.

Das Herstellungsverfahren, in dessen Zusammenhang das Verfahren zum Laserschneiden von Bauteilen angewandt werden kann, sieht nunmehr vor, die mit der Lichtscheibe im Übermaß fertig gestellte Fahrzeugleuchte in einer Aufnahme anzuordnen, und anschließend die durch den Verlauf der durch die am Fahrzeug vorgesehenen Einbauöffnung gegebene Kontur gegebenenfalls unter Einhaltung eines konstanten Spaltmaßes zwischen dem Außenumfang der Lichtscheibe und der Kontur der Einbauöffnung vorzugsweise vermittels 3D-Laserschneiden auf die zunächst im Übermaß ausgeführte Lichtscheibe der Fahrzeugleuchte zu übertragen, so dass die Lichtscheibe im Anschluss ein entsprechend den Toleranzvorgaben absolutes Maß einhält.

Es ist ersichtlich, dass die Erfindung durch einen Laserbeschnitt verwirklicht sein kann, bei dem die Schnittfläche der Schnittkante entlang der Schnittlinie mit der der Laserlichtquelle während des Laserschneidens zugewandten Oberfläche des beschnittenen Bauteils bauteilseitig einen stumpfen Winkel einschließt.

Das insbesondere als Lichtscheibe ausgeführte Bauteil fällt bevorzugt in dem Bereich des Laserzuschnitts nach außen hin zur Seite des Leuchtengehäuses hin ab, so dass ein beim Laserschneiden ansonsten entstehender Wulst nicht senkrecht zur Lichtscheibenoberfläche absteht, sondern sich an die Schräge der Lichtscheibe anlegt oder anlehnt, im Idealfall sogar mit der schrägstehenden Oberfläche verschmilzt.

Die Hauptidee besteht hierbei in einem nacharbeitungsfreien Laserbeschnitt der Lichtscheibe mittels Laser, wobei an der Lichtscheibe der Beschnitt in einem an der Lichtscheibe angeformten Radius oder Flankenbereich erfolgt. Dadurch wird gewährleistet, dass an der Außenkante nach Laserbeschnitt ein Radiusbereich stehenbleibt und somit eine scharfe Kante vermieden wird.

Durch den Beschnitt der Lichtscheibe in Radius- bzw. Flankenbereich ergibt sich im Vergleich zu den scharfkantigen Schnittergebnissen beim Beschnitt gerader Lichtscheiben ein optisch und haptisch wesentlich verbessertes Bild.

Das Verfahren kann alternativ oder zusätzlich einzelne oder eine Kombination mehrerer einleitend in Verbindung mit dem Stand der Technik und/oder in einem oder mehreren der zum Stand der Technik erwähnten Dokumente beschriebene Merkmale aufweisen.

Vorteile gegenüber dem Stand der Technik ergeben sich durch eine Verringerung der notwendigen Arbeitsschritte beim Laserzuschnitt von Bauteilen von Fahrzeugleuchten, insbesondere Lichtscheiben.

Die Erfindung und ihre Vorteile werden nachfolgend anhand von in den Zeichnungen dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Verfahren ausgestaltet sein kann und stellen keine abschließende Begrenzung dar. Es zeigen in schematischer Darstellung:

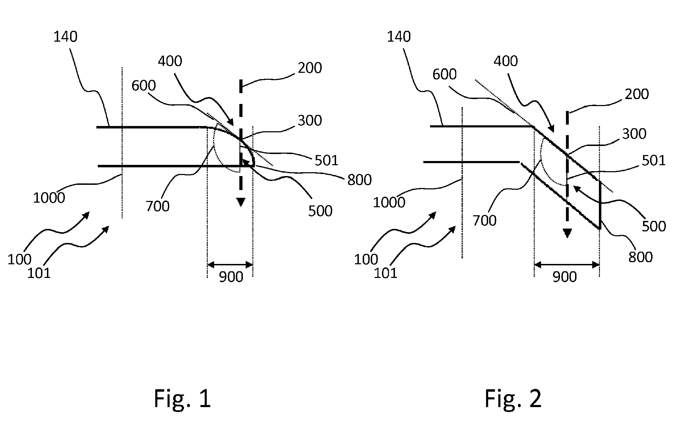

- Fig. 1: eine Teilansicht eines normal zu einer Schnittlinie einer herzustellenden Schnittkante verlaufenden Querschnitts durch ein vermittels eines erfindungsgemäßen Verfahrens zum Laserschneiden gemäß eines ersten Ausführungsbeispiels zu beschneidendes Bauteil, wobei ein zwischen einer Flächennormalen zu einer sich entlang der Schnittlinie erstreckenden Oberflächenpartie einer einem Auftreffpunkt eines von einer Laserlichtquelle ausgehenden Laserstrahls zugewandten Oberfläche des Bauteils und einer sich an die Schnittlinie anschließenden Schnittfläche der herzustellenden Schnittkante bauteilseitig eingeschlossener Winkel innerhalb eines Endabschnitts zum Rand des Bauteils hin konstant ist.
- Fig. 2: eine Teilansicht eines normal zu einer Schnittlinie einer herzustellenden Schnittkante verlaufenden Querschnitts durch ein vermittels eines erfindungsgemäßen Verfahrens zum Laserschneiden gemäß eines zweiten Ausführungsbeispiels zu beschneidendes Bauteil, wobei ein zwischen einer Flächennormalen zu einer sich entlang der Schnittlinie erstreckenden Oberflächenpartie einer einem Auftreffpunkt eines von einer Laserlichtquelle ausgehenden Laserstrahls zugewandten Oberfläche des Bauteils und einer sich an die Schnittlinie anschließenden Schnittfläche der herzustellenden Schnittkante bauteilseitig eingeschlossener Winkel innerhalb eines Endabschnitts zum Rand des Bauteils hin stetig zunimmt.

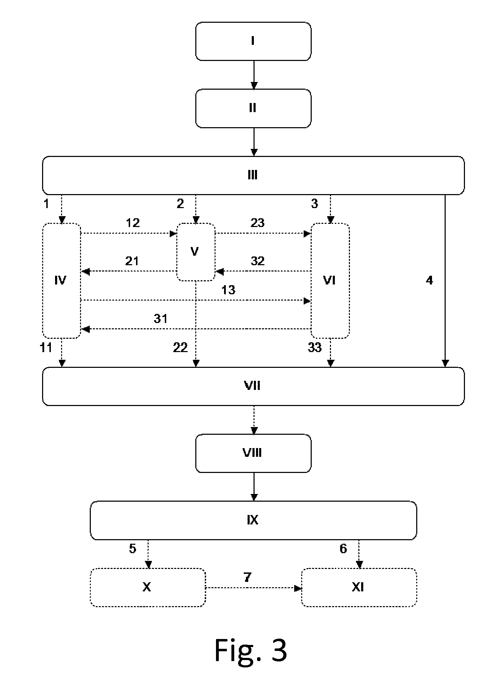

- Fig. 3: ein Ablaufdiagramm eines Ausführungsbeispiels eines Verfahrens zum Laserschneiden während einer Herstellung von Fahrzeugleuchten.

Ein erfindungsgemäßes Verfahren zum Laserschneiden von nachfolgend unter dem Begriff Bauteil 100 zusammengefassten Fahrzeugleuchten und/oder Bauteilen von Fahrzeugleuchten, insbesondere Lichtscheiben 101 von Fahrzeugleuchten, sieht vor, einen von einer Laserlichtquelle ausgehenden Laserstrahl 200 auf ein Bauteil zu richten und den Auftreffpunkt 300 des Laserstrahls 200 auf einer Oberflächenpartie 400 des Bauteils 100 entlang einer auszubildenden, in den in Fig. 1 und Fig. 2 jeweils gezeigten Querschnitten senkrecht zur Zeichenebene verlaufende Schnittlinie einer herzustellenden Schnittkante 500 zu führen.

Die Schnittkante 500 setzt sich zusammen aus der bereits erwähnten Schnittlinie, welche entlang einer Oberflächenpartie 400 einer dem Auftreffpunkt 300 des von der Laserlichtquelle ausgehenden Laserstrahls 200 zugewandten Oberfläche 140 eines zu beschneidenden Bauteils 100 verläuft, und einer sich aus der Sicht des Auftreffpunkts 300 des Laserstrahls 200 gesehen an diese Schnittlinie anschließenden Schnittfläche 501, die sich bei einem vollständigen Schnitt ausgehend von der Schnittlinie auf der dem Auftreffpunkt 300 des von der Laserlichtquelle ausgehenden Laserstrahls 200 zugewandten Oberflächenpartie 400 durch die gesamte Dicke des Bauteils 100 hindurch erstreckt.

Die Schnittfläche 501 schließt sich in einem in einer normal zur Schnittlinie liegenden Ebene verlaufenden, in Fig. 1 und Fig. 2 jeweils dargestellten Querschnitt durch das Bauteil 100 hindurch unter einem Winkel 700 an eine an der Schnittlinie an die dem Auftreffpunkt 300 des von der Laserlichtquelle ausgehenden Laserstrahls 200 zugewandte Oberflächenpartie 400 angelegte Tangente 600 an.

Das Verfahren zeichnet sich dadurch aus, dass in mindestens einem in einer normal zur Schnittlinie liegenden Ebene verlaufenden Querschnitt durch das Bauteil 100 hindurch die Tangente 600 an die Oberflächenpartie 400 am Auftreffpunkt 300 des von der Laserlichtquelle ausgehenden Laserstrahls 200 und die Schnittfläche 501 aus Sicht der Schnittlinie zum Bauteil beziehungsweise zu einem Zentrum des Bauteils 100 hin einen stumpfen Winkel 700 einschließen.

Dieser stumpfe Winkel 700 liegt am fertig zugeschnittenen Bauteil 100 bauteilseitig der Schnittfläche 501 und bauteilseitig der Tangente zur Oberflächenpartie 400 an der Schnittlinie eingeschlossen.

Mit anderen Worten schließen die Schnittfläche 501 und die Oberflächenpartie 400, auf der die Schnittlinie, auf der dem Auftreffpunkt 300 des von der Laserlichtquelle ausgehenden Laserstrahls 200 zugewandten Oberfläche 140 des Bauteils 100 verläuft, bauteilseitig einen stumpfen Winkel 700 ein.

Der Flächenverlauf der Oberfläche 140 des Bauteils 100, auf der sich die dem Auftreffpunkt 300 des von der Laserlichtquelle ausgehenden Laserstrahls 200 zugewandte Oberflächenpartie 400 befindet, kann eben oder zweidimensional gewölbt oder dreidimensional gekrümmt sein.

Der zwischen 90° und 180° liegende, stumpfe Winkel beträgt vorzugsweise 105° bis 165, besonders bevorzugt 112,5° bis 157,5°.

Vorzugsweise liegt die dem Auftreffpunkt 300 des von der Laserlichtquelle ausgehenden Laserstrahls 200 zugewandte Oberflächenpartie 400 auf einer einem Betrachter beim Umgang mit einer fertigen Fahrzeugleuchte zugewandten Seite eines Bauteils 100.

Bei einem entsprechenden Umgang kann es sich um eine Betrachtung eines in Betrieb befindlichen Fahrzeugs von einem anderen Verkehrsteilnehmer aus, oder um einen Einbau oder Austausch einer Fahrzeugleuchte bei einer Herstellung oder einer Reparatur oder Wartung eines Fahrzeugs handeln, um ohne Anspruch auf Vollständigkeit nur einige denkbare Ausgestaltungen eines Umgangs mit einer fertigen Fahrzeugleuchte zu nennen.

Die dem Auftreffpunkt 300 des von der Laserlichtquelle ausgehenden Laserstrahls 200 zugewandte Oberfläche 140 des Bauteils 100 fällt in einem in Fig. 1 und Fig. 2 jeweils dargestellten, normal zur Schnittlinie verlaufenden Querschnitt durch das Bauteil 100 hindurch gesehen zumindest im Bereich der Oberflächenpartie 400 vom in Fig. 1 und Fig. 2 jeweils weiter links liegenden Zentrum des Bauteils 100 zu dessen Rand hin bevorzugt ab.

Vorzugsweise ist in einem in Fig. 1 und Fig. 2 jeweils dargestellten, normal zur Schnittlinie verlaufenden Querschnitt durch das Bauteil 100 hindurch gesehen ein zwischen einer die Schnittlinie schneidenden Flächennormalen der Oberflächenpartie 400 und der Schnittfläche 501 bauteilseitig eingeschlossener Winkel größer, als ein zwischen einer Flächennormalen im Zentrum des Bauteils 100 und der Schnittfläche 501 bauteilseitig eingeschlossener Winkel.

Das Bauteil kann in einem in Fig. 1 und Fig. 2 jeweils dargestellten, normal zur Schnittlinie verlaufenden Querschnitt einen gekrümmten Verlauf seiner dem Auftreffpunkt 300 des von der Laserlichtquelle ausgehenden Laserstrahls 200 zugewandten Oberfläche 140 aufweisen, wobei der zwischen einer Flächennormalen und der Schnittfläche 501 bauteilseitig eingeschlossener Winkel mit zunehmendem Abstand vom Zentrum des Bauteils 100 zunimmt, oder umgekehrt betrachtet, mit zunehmendem Abstand vom Rand 800 des Bauteils abnimmt.

Das Verfahren kann vorsehen, durch den Laserzuschnitt nur einen Teil des Rands 800 des Bauteils 100 zu beschneiden, oder den gesamten Rand 800. Demnach kann ein teilweise oder ein umlaufender Laserzuschnitt des Bauteils 100 vorgesehen sein.

Die dem Auftreffpunkt 300 des von der Laserlichtquelle ausgehenden Laserstrahls 200 zugewandte Oberflächenpartie 400 kann in wenigstens einem Endabschnitt 900 einer beispielsweise vorderen Oberfläche 140 eines Bauteils in einem in Fig. 1 und Fig. 2 jeweils dargestellten, normal zur Schnittlinie verlaufenden Querschnitt durch das Bauteil 100 gesehen liegen.

Bei der dem Auftreffpunkt 300 des von der Laserlichtquelle ausgehenden Laserstrahls 200 zugewandten Oberflächenpartie 400 kann es sich demnach in wenigstens einem in Fig. 1 und Fig. 2 jeweils dargestellten, normal zur Schnittlinie verlaufenden Querschnitt durch das Bauteil 100 um mindestens einen Endabschnitt 900 einer beispielsweise vorderen Oberfläche 140 eines Bauteils 100 handeln.

Innerhalb eines Endabschnitts 900 in einem in Fig. 1 dargestellten, normal zur Schnittlinie verlaufenden Querschnitt kann ein zwischen einer Flächennormalen zur Oberflächenpartie 400 der dem Auftreffpunkt 300 des von der Laserlichtquelle ausgehenden Laserstrahls 200 zugewandten Oberfläche 140 und der Schnittfläche 501 eingeschlossener Winkel zum Rand 800 hin stetig zunehmen.

Innerhalb eines Endabschnitts 900 in einem in Fig. 2 dargestellten, normal zur Schnittlinie verlaufenden Querschnitt kann ein zwischen einer Flächennormalen zur Oberflächenpartie 400 der dem Auftreffpunkt 300 des von der Laserlichtquelle ausgehenden Laserstrahls 200 zugewandten Oberfläche 140 und der Schnittfläche 501 eingeschlossener Winkel konstant sein.

Die beispielsweise vordere, dem Auftreffpunkt 300 des von der Laserlichtquelle ausgehenden Laserstrahls 200 zugewandte Oberfläche 140 des Bauteils 100 kann demnach im Bereich des Laserzuschnitts mit einer konstanten Schrägstellung, wie etwa einer Phase (Fig. 2) und/oder mit einer mit zunehmendem Abstand vom Zentrum der Lichtscheibe zunehmenden Schrägstellung, wie etwa einem Radius oder einem Parabel- oder Hyperbelverlauf (Fig. 1) versehen sein.

Die beispielsweise als ein Endabschnitt 900 einer beispielsweise vorderen Oberfläche 140 eines Bauteils 100 ausgeführte, dem Auftreffpunkt 300 des von der Laserlichtquelle ausgehenden Laserstrahls 200 zugewandte Oberflächenpartie 400 kann entlang der Schnittlinie gesehen eine gleichbleibende oder eine veränderliche Schrägstellung in Bezug zu wenigstens einem Abschnitt der verbleibenden, in Bezug auf den Auftreffpunkt 300 des von der Laserlichtquelle ausgehenden Laserstrahls 200 beispielsweise vorderen, beispielsweise gekrümmten Oberfläche 140 des Bauteils 100 in wenigstens einem in Fig. 1 und Fig. 2 jeweils dargestellten, normal zur Schnittlinie verlaufenden Querschnitt durch das Bauteil 100 gesehen aufweisen.

Der mindestens eine Endabschnitt 900 kann in Bezug zu wenigstens einem Abschnitt der verbleibenden, in Bezug auf den Auftreffpunkt 300 des von der Laserlichtquelle ausgehenden Laserstrahls 200 beispielsweise vorderen, beispielsweise gekrümmten Oberfläche 140 des Bauteils 100 in wenigstens einem in Fig. 1 und Fig. 2 jeweils dargestellten, normal zur Schnittlinie verlaufenden Querschnitt durch das Bauteil 100 in einer oder in mehreren unterschiedlichen Richtungen schräg angeordnet sein.

Beispielsweise können in Bezug zu wenigstens einem Abschnitt der verbleibenden, in Bezug auf den Auftreffpunkt 300 des von der Laserlichtquelle ausgehenden Laserstrahls 200 beispielsweise vorderen, beispielsweise gekrümmten Oberfläche 140 des Bauteils 100 in wenigstens einem in Fig. 1 und Fig. 2 jeweils dargestellten, normal zur Schnittlinie verlaufenden Querschnitt durch das Bauteil 100 jeweilige gegenüberliegende Endabschnitte 900 in unterschiedlichen Richtungen schräg angeordnet sein.

Die Schnittfläche 501 kann in Bezug auf die Endabschnitte 900 einer beispielsweise vorderen Oberfläche 140 des Bauteils 100 so schräg stehen, dass in wenigstens einem in Fig. 1 und Fig. 2 jeweils dargestellten, normal zur Schnittlinie verlaufenden Querschnitt durch das Bauteil 100 ein Winkel zwischen einer Bezugslinie 1000, welche durch das Bauteil hindurchgeht und gleiche Winkel in Bezug auf die jeweiligen Endabschnitte 900 der beispielsweise vorderen Oberfläche 140 ausbildet, und einer Linie senkrecht zu jedem der Endabschnitte 900 der beispielsweise vorderen Oberfläche 140 kleiner sein, als ein Winkel zwischen der Bezugslinie 1000 und einer Linie senkrecht zu der Schnittfläche 501.

Die Schnittfläche 501 kann in wenigstens einem in Fig. 1 und Fig. 2 jeweils dargestellten, normal zur Schnittlinie verlaufenden Querschnitt durch das Bauteil 100 in mindestens einem Endabschnitt 900 parallel zu einer Bezugslinie 1000 verlaufen, welche durch das Bauteil 100 hindurchgeht und gleiche Winkel in Bezug auf die jeweiligen Endabschnitte 900 der beispielsweise vorderen Oberfläche 140 ausbildet.

Das Bauteil 100 besteht vorzugsweise aus einem Kunststoff.

Bei dem Bauteil 100 handelt es sich besonders bevorzugt um eine Lichtscheibe 101 einer Fahrzeugleuchte.

Das Material der Lichtscheibe 101 ist vorzugsweise ein Polymethylmethacrylat (PMMA). PMMA kann beispielsweise mittels einer CO2-Laserquelle geschnitten werden. Auch andere Laserquellen sind denkbar, welche Wellenlängen im Bereich von 800 nm bis 1 mm zu erzeugen in der Lage sind, ebenso wie grundsätzlich andere Materialien als PMMA für die Lichtscheibe 101 denkbar sind.

In zumindest einem Abschnitt der Lichtscheibe 101 können jeweilige Endabschnitte 900 der beispielsweise gekrümmten vorderen Oberfläche 140 entsprechend einem zur Laserschweißverbindung mit einem Randbereich eines Leuchtengehäuses einer Fahrzeugleuchte vorgesehenen Schweißflächenabschnitt in unterschiedlichen Richtungen schräg angeordnet sein.

Die Schweißflächenabschnitte bilden einen Schweißflächenverlauf, der in jedem in Fig. 1 und Fig. 2 jeweils dargestellten,normal zur Schnittlinie verlaufenden Querschnitt durch das Bauteil 100 parallel zu einem durch Randflächenabschnitte einer eine an der fertigen Fahrzeugleuchte durch die Lichtscheibe 101 verschlossene Lichtöffnung umgebenden Wandung eines Leuchtengehäuses gebildeten Randflächenabschnittverlauf liegt.

Das Zuschneiden erfolgt besonders bevorzugt als 3D-Laserbeschnitt vermittels 3D-Laserschneiden.

Die Führung des Auftreffpunkts 300 des Laserstrahls 200 auf einer Oberfläche 140 des Bauteils 100 entlang einer auf einer Oberflächenpartie 400 der Oberfläche 140 auszubildenden Schnittlinie einer herzustellenden Schnittkante 500 kann durch Relativbewegung von Laserlichtquelle und Bauteil 100 erfolgen.

Das Verfahren kann beispielsweise vorsehen, das Bauteil 100 ortsfest oder beweglich zu halten.

Beispielsweise kann das Verfahren vorsehen, die Laserlichtquelle translatorisch und/oder rotatorisch im Raum zu bewegen, um den Auftreffpunkt 300 des Laserstrahls 200 und das Bauteil 100 entlang einer Schnittlinie einer herzustellenden Schnittkante 500 relativ zueinander zu bewegen.

Die Bewegung der Laserlichtquelle kann beispielsweise in einer, in zwei oder in drei voneinander in mathematischem Sinne unabhängigen Richtungen translatorisch im Raum vorgesehen sein.

Alternativ oder zusätzlich kann die Bewegung der Laserlichtquelle beispielsweise um eine, zwei oder drei voneinander in mathematischem Sinne unabhängigen Achsen rotatorisch im Raum vorgesehen sein.

Die Bewegung der Laserlichtquelle im Raum kann hierbei entlang einer der herzustellenden Schnittkante 500 in mathematischem Sinne ähnlichen Bahnkurve erfolgen.

In der ein Teilgebiet der Mathematik darstellenden Geometrie sind zwei Figuren genau dann zueinander ähnlich, wenn sie durch eine häufig als Ähnlichkeit bezeichnete Ähnlichkeitsabbildung ineinander überführt werden können. Im Sinne der vorliegenden Erfindung sind die Bahnkurve, entlang welcher die auf die Schnittlinie der herzustellenden Schnittkante 500 ausgerichtete Laserlichtquelle im Raum bewegt wird, und der Verlauf der herzustellenden Schnittkante 500 ähnlich, wenn eine geometrische Abbildung existiert, die sich aus zentrischen Streckungen und Kongruenzabbildungen, wie beispielsweise Verschiebungen, Drehungen, Spiegelungen zusammensetzen lässt und die Bahnkurve auf die herzustellende Schnittkante 500 abbildet. Winkel und Streckenverhältnisse stimmen bei durch die Bahnkurve und die herzustellende Schnittkante 500 gebildeten, ähnlichen Figuren überein.

Die Führung des Auftreffpunkts 300 des Laserstrahls 200 auf einer Oberflächenpartie 400 des Bauteils 100 entlang einer auf der Oberfläche 140 auszubildenden Schnittlinie einer herzustellenden Schnittkante 500 kann alternativ oder zusätzlich durch eine ein- oder mehrmalige Umlenkung des von der Laserlichtquelle ausgehenden Laserstrahls 200 bis zu seinem Auftreffpunkt 300 auf der Oberfläche 140 des Bauteils 100 erfolgen, wobei der Ort und/oder die Richtung zumindest einer Umlenkung, beispielsweise einer entlang des Laserstrahls 200 ausgehend von der Laserlichtquelle letzten Umlenkung vor dem Erreichen des Bauteils 100 gesehen letzten Umlenkung veränderlich sein können.

Ein in Zusammenhang mit der Herstellung von Fahrzeugleuchten ausgeführtes, zuvor beschriebenes Verfahren zum Laserschneiden ist in seinem Ablauf in Fig. 3 dargestellt.

Die Fahrzeugleuchten weisen jeweils:
- einen von einer Lichtscheibe 101 und einem Leuchtengehäuse umschlossenen, zumindest ein Leuchtmittel mit wenigstens einer Lichtquelle beherbergenden Leuchteninnenraum, und
- ein Leuchtengehäuse mit zumindest einer an der fertigen Fahrzeugleuchte von der Lichtscheibe 101 verschlossen und von wenigstens einer Wandung des Leuchtengehäuses umgebenen Lichtöffnung für einen Lichtaustritt wenigstens einer Lichtquelle des mindestens einen Leuchtmittels aus dem Leuchteninnenraum,
auf, wobei
- die wenigstens eine Wandung eine der umgebenen Lichtöffnung zugewandte Innenoberfläche und eine der umgebenen Lichtöffnung abgewandte Außenoberfläche sowie eine um die Lichtöffnung umlaufende Randfläche aufweist, welche entlang eines mit seiner Kontur den Flächenverlauf der Lichtöffnung widerspiegelnden Innenrands an die Innenoberfläche und entlang eines Außenrands an die Außenoberfläche angrenzt und zwischen Innenrand und Außenrand die Innenoberfläche und die Außenoberfläche verbindet und den Flächenverlauf der Lichtöffnung fortsetzt, und
- an dem Leuchtengehäuse mindestens ein Aufnahmepunkt zur Befestigung mindestens einer Befestigungsvorrichtung zur Befestigung der fertigen Fahrzeugleuchte in einer Einbauöffnung an einem Karosserieteil oder einer Karosserie eines Fahrzeugs vorgesehen ist.

Das Verfahren sieht in einem ersten Verfahrensschritt I eine Bestückung des in eine oder mehrere Leuchtenkammern unterteilten, mindestens eine von einer Lichtscheibe 101 zu verschließende Lichtöffnung aufweisenden Leuchtengehäuses mit den von der fertigen Fahrzeugleuchte im Leuchteninnenraum beherbergten Einrichtungen und Bauteilen vor. Zu diesen Einrichtungen und Bauteilen zählen beispielsweise:
- das mindestens eine Leuchtmittel mit seiner wenigstens einen Lichtquelle,
- die elektrische Kontaktierung des mindestens einen Leuchtmittels sowie gegebenenfalls dessen wenigstens einer Lichtquelle, sofern eine solche nicht bereits auf einem Leiterbahnträger, beispielsweise auf einer Platine oder einem in MID-Technik (MID-Technik: Molded-Interconnect-Device-Technik) hergestellten spritzgegossenen Schaltungsträger, eines in einem separaten Herstellungsprozess fertig gestellten Leuchtmittels integriert ist,
- gegebenenfalls zusätzliche, zum Betrieb der wenigstens einen Lichtquelle des mindestens einen Leuchtmittels und/oder zu dessen Betrieb in Verbindung mit einem Fahrzeug erforderliche, Eingangs beschriebene Elektronikbauteile, sofern diese nicht bereits auf einem Leiterbahnträger, beispielsweise auf einer Platine oder einem in MID-Technik hergestellten spritzgegossenen Schaltungsträger, eines in einem separaten Herstellungsprozess fertig gestellten Leuchtmittels beispielsweise mit wenigstens einer LED als zumindest eine Lichtquelle montiert und elektrisch kontaktiert sind,
- gegebenenfalls zumindest ein mindestens einer Lichtquelle wenigstens eines Leuchtmittels zugeordneter Reflektor, sofern ein solcher nicht bereits in einem vorangehenden, auf die Herstellung des Leuchtengehäuses folgenden Bearbeitungsschritt durch Aufbringen einer reflektierenden Beschichtung zumindest auf Teile der Innenfläche des Leuchtengehäuses hergestellt worden ist,
- gegebenenfalls eine oder mehrere Optikscheiben, sowie
- gegebenenfalls weitere erforderliche Elemente.

Das Verfahren sieht in einem zweiten Verfahrensschritt II eine Herstellung einer gemäß dem Flächenverlauf der Lichtöffnung geformten Lichtscheibe 101 der Fahrzeugleuchte in einem Übermaß vor. Der Flächenverlauf kann eben oder zweidimensional oder dreidimensional gewölbt sein, wobei bei einer zweidimensional gewölbten Ausführung ein Schnitt in einer Richtung durch den Flächenverlauf hindurch eine Gerade bildet, und in einer dreidimensional gekrümmten Ausführung sich kein Schnitt mit einem geraden Verlauf findet.

Die Herstellung in einem Übermaß erfolgt dabei so, dass die Lichtscheibe 101 in auf der Randfläche aufgelegtem Zustand nicht nur auf der Randfläche aufliegt, sondern in mindestens einer Richtung über den Außenrand der Randfläche übersteht und damit die Randfläche in Richtung von der Lichtöffnung weg über die Außenoberfläche hinaus überragt. Vorzugsweise wird die Lichtscheibe 101 dabei so hergestellt, dass sie wenn sie auf die Randfläche aufgelegt ist, mit ihrem bevorzugt wenigstens einen Endabschnitt 900 umfassenden Rand 800 allseitig über den Außenrand der Randfläche übersteht. Mit anderen Worten überragt die Lichtscheibe 101 vorzugsweise in mehr als einer Richtung, besonders bevorzugt allseitig den Außenrand und damit die Randfläche in Richtung von der Lichtöffnung weg.

Das Verfahren sieht in einem dritten Verfahrensschritt III ein Verschließen der Lichtöffnung und damit des Leuchteninnenraums durch Auflegen der Lichtscheibe 101 auf die Randfläche unter anschließendem, vorzugsweise stoffschlüssigem Verbinden der Lichtscheibe 101 mit dem Leuchtengehäuse, besonders bevorzugt mit der Randfläche des Leuchtengehäuses, beispielsweise durch Kleben, Verschweißen oder dergleichen, insbesondere Laserschweißen, vor. Die nach dem dritten Verfahrensschritt III fest mit dem Leuchtengehäuse verbundene Lichtscheibe 101 steht dabei mit ihrem bevorzugt wenigstens einen Endabschnitt 900 umfassenden Rand 800 in der mindestens einen Richtung, vorzugsweise in allen Richtungen, über den Außenrand der Radfläche über.

Das Verfahren sieht in einem durch gestrichelte Pfeile 1 und 11 dargestellten weiteren Verlauf einen alternativen vierten Verfahrensschritt IV vor, in dem in einem beispielsweise in Linie zum Herstellungsprozess der Fahrzeugleuchten angeordneten Behandlungsschritt beispielsweise ein Polieren der Lichtscheibe 101 erfolgt.

Es kann alternativ zum vierten Verfahrensschritt IV, wie durch gestrichelte Pfeile 2 und 22 dargestellt, oder zusätzlich zum vierten Verfahrensschritt IV, wie durch gestrichelte Pfeile 1 und 12 und 22 dargestellt, in einem fünften Behandlungsschritt V beispielsweise ein Tempern der Fahrzeugleuchte, beispielsweise zum Relaxieren der Lichtscheibe 101, vorgesehen sein.

Es kann:
- alternativ zum vierten Verfahrensschritt IV und alternativ zum fünften Verfahrensschritt V, wie durch gestrichelte Pfeile 3 und 33 dargestellt, oder
- alternativ zum vierten Verfahrensschritt IV und zusätzlich zum fünften Verfahrensschritt IV, wie durch gestrichelte Pfeile 2, 23 und 33 dargestellt, oder
- zusätzlich zum vierten Verfahrensschritt IV und alternativ zum fünften Verfahrensschritt IV, wie durch gestrichelte Pfeile 1, 13 und 33 dargestellt, oder
- zusätzlich zum vierten Verfahrensschritt IV und zusätzlich zum fünften Verfahrensschritt IV, wie durch gestrichelte Pfeile 1, 12, 23 und 33 dargestellt,
ein sechster Verfahrensschritt VI vorgesehen sein, in dem beispielsweise eine Qualitätsprüfung der bis hierhin hergestellten Fahrzeugleuchte vorgesehen ist.

Wichtig ist hervorzuheben, dass die Aufzählung der alternativen oder zusätzlichen vierten, fünften und sechsten Verfahrensschritte IV, V, VI nicht vollständig oder abschließend zu verstehen ist. Beispielsweise können alternativ oder zusätzlich zu einem oder mehreren der aufgezählten vierten, fünften und sechsten Verfahrensschritte IV, V, VI Behandlungsschritte, wie beispielsweise das Entladen beispielsweise durch Polieren elektrostatisch aufgeladener Lichtscheiben 101, oder Verfahrensschritte, wie das Anbringen mindestens eines Befestigungselements mindestens einer zur Befestigung der Fahrzeugleuchte in einer Einbauöffnung eines Karosserieteils oder einer Karosserie eines Fahrzeugs vorgesehenen Befestigungsvorrichtung an dem mindestens einen hierfür vorgesehenen Aufnahmepunkt am Leuchtengehäuse vorgesehen sein.

Auch die Abfolge der beispielhaft genannten, möglichen zusätzlichen Verfahrensschritte IV, V VI sowie der beispielhaft genannten, möglichen zusätzlichen Behandlungs- und/oder Verfahrensschritte kann in einer anderen, als der beschriebenen Kombination und/oder, wie durch die in umgekehrter Richtung verlaufenden Pfeile 21, 31 und 32 dargestellt, in einer anderen, als der beschriebenen Reihenfolge im Anschluss an den dritten Verfahrensschritt III und vor einem nachfolgend beschriebenen siebten Verfahrensschritt VII erfolgen.

Wesentlich ist, wie durch den Pfeil 4 unter alternativer Umgehung der vorangehend beschriebenen, wahlweise zusätzlichen, vierten, fünften und sechsten Verfahrensschritte IV, V, VI dargestellt, dass im Anschluss auf die Herstellung einer Fahrzeugleuchte mit einer von einer im Übermaß hergestellten Lichtscheibe 101 verschlossenen Lichtöffnung im ersten Verfahrensschritt I, zweiten Verfahrensschritt II und dritten Verfahrensschritt III, auf den dritten Verfahrensschritt III ein siebter Verfahrensschritt VII folgt, welcher das Einbringen, vorzugsweise Einlegen der Fahrzeugleuchte entsprechend ihrer Anordnung in einer Einbauöffnung eines Karosserieteils oder einer Karosserie eines Fahrzeugs lagegenau in eine Aufnahme vorsieht.

Das lagegenaue Einbringen der Fahrzeugleuchte in die Aufnahme unter Ausrichtung kann vermittels Verwendung des mindestens einen Aufnahmepunkts am Leuchtengehäuse oder über wenigstens ein gegebenenfalls bereits an dem zumindest einen Aufnahmepunkt montiertes Befestigungselement als mindestens ein Fixpunkt, welcher die tatsächliche Ausrichtung und Lage der Fahrzeugleuchte relativ zu dem einen oder den mehreren Aufnahmepunkten in der Einbauöffnung widerspiegelt, erfolgen.

Beispielsweise kann die Fahrzeugleuchte über den mindestens einen Aufnahmepunkt oder die wenigstens einen gegebenenfalls bereits montierten Befestigungseinrichtung in der Aufnahme ausgerichtet und gehalten werden.

An den siebten Verfahrensschritt VII schließt sich ein achter Verfahrensschritt VIII an, bei dem das Zuschneiden vermittels Laserschneidens des über den Außenrand ragenden, bevorzugt wenigstens einen Endabschnitt 900 umfassenden Rands 800 der Lichtscheibe 101 unter Bezugnahme auf die als Fixpunkte dienenden Aufnahmepunkte entsprechend Toleranzvorgaben, um eine maximal mögliche präzise Erfüllung der Toleranzvorgaben insgesamt und insbesondere beim späteren Einbau in der Einbauöffnung zu erhalten, vorgesehen ist.

Das Zuschneiden im achten Verfahrensschritt VIII erfolgt bevorzugt als 3D-Laserbeschnitt vermittels 3D-Laserschneiden.

Das Laserschneiden ist ein thermisches Trennverfahren, bei dem ein fokussierter Laserstrahl den transparenten Kunststoff der Lichtscheibe 101 aufschmilzt und verdampft. Durch den geometrisch und thermisch exakt definierten Energieeintrag des Laserstrahls können 2D- und 3D-Konturen somit berührungslos und kraftfrei geschnitten werden. Somit können wesentlich exaktere Toleranzbearbeitungen durchgeführt werden, als dies mit dem Stand der Technik entsprechenden, mechanischen Bearbeitungsanlagen möglich ist.

Bei der Laserbearbeitung treten keine Späne oder Partikel auf, die in spanenden Bearbeitungsanlagen trotz Absauganlagen zu Verschmutzungen oder sogar zu Partikeln im Leuchteninnenraum führen können.

Bei der für das Laserschneiden verwendeten Laserquelle handelt es sich beispielsweise um eine CO2-Laserquelle mit welcher das in der Regel aus PMMA bestehende Material der Lichtscheibe 101 geschnitten werden kann.

In einem darauf folgenden neunten Verfahrensschritt IX erfolgt die Entnahme der präzise bearbeiteten und fertig hergestellten Fahrzeugleuchte aus der Aufnahme, wodurch das Verfahren bevorzugt endet.

Wie durch einen gestrichelten Pfeil 5 dargestellt, kann im Anschluss an den neunten Verfahrensschritt IX die nach deren Entnahme aus der Aufnahme vollständig zum Einbau in eine Einbauöffnung eines Karosserieteils oder einer Karosserie eines Fahrzeugs vorbereitete Fahrzeugleuchte in einem zehnten Verfahrensschritt X einer Qualitätskontrolle unterzogen werden. Dabei kann die Maßhaltigkeit der zugeschnittenen Lichtscheibe 101 kontrolliert werden.

Dabei kann das Zuschneiden der Lichtscheibe 101 anhand der in einer solchen Qualitätsprüfung kontrollierten Maßhaltigkeit der zugeschnittenen Lichtscheibe 101 kalibiriert werden.

Die Qualitätskontrolle findet vorzugsweise in Linie mit dem Produktionsablauf statt oder ist im Produktionsablauf untergebracht. Wichtig ist hervorzuheben, dass grundsätzlich auch denkbar ist, die Maßhaltigkeit direkt nach dem Zuschneiden im achten Verfahrensschritt VIII zu prüfen, während die Fahrzeugleuchte noch in der Aufnahme liegt.

Das Verfahren kann nach der Qualitätskontrolle im zehnten Verfahrensschritt X enden.

Wie durch einen gestrichelten Pfeil 6 dargestellt, kann in einem alternativ zum zehnten Verfahrensschritt X im Anschluss an den neunten Verfahrensschritt IX statt findenden elften Verfahrensschritt XI die nach deren Entnahme aus der Aufnahme vollständig zum Einbau in eine Einbauöffnung eines Karosserieteils oder einer Karosserie eines Fahrzeugs vorbereitete Fahrzeugleuchte:
- in eine Transportverpackung eingebracht und bis zu ihrem Einbau in eine Einbauöffnung gelagert und/oder transportiert, und/oder
- einer Montagelinie zum Einbau in eine Einbauöffnung zugeführt werden, wonach das Verfahren in diesem Fall endet.

Wie durch die gestrichelten Pfeile 5 und 7 dargestellt, kann der elfte Verfahrensschritt XI auch im Anschluss an den neunten Verfahrensschritt IX und nach dem zehnten Verfahrensschritt X zusätzlich statt finden, wobei die nach deren Entnahme aus der Aufnahme vollständig zum Einbau in eine Einbauöffnung eines Karosserieteils oder einer Karosserie eines Fahrzeugs vorbereitete Fahrzeugleuchte in dem elften Verfahrensschritt XI nach der Qualitätskontrolle im zehnten Verfahrensschritt X:
- in eine Transportverpackung eingebracht und bis zu ihrem Einbau in eine Einbauöffnung gelagert und/oder transportiert, und/oder
- einer Montagelinie zum Einbau in eine Einbauöffnung zugeführt werden, wonach das Verfahren in diesem Fall endet.

Wichtig ist hervorzuheben, dass das Anbringen leuchtenseitiger Befestigungselemente alternativ auch nach der Entnahme aus der Aufnahme nachgeholt werden kann, sofern hierfür kein Befestigungsverfahren verwendet ist, welches zu einem Verzug der Fahrzeugleuchte führt.

Ebenfalls ist unter den zuvor genannten Voraussetzungen denkbar, leuchtenseitig vorgesehene Befestigungselemente erst nach dem Transport der Fahrzeugleuchten zu einer Fertigungslinie für Fahrzeuge, wo die Fahrzeugleuchten in entsprechende Einbauöffnungen von Karosserieteilen bzw. Karosserien befestigt werden, zu montieren. Dies kann beispielsweise unmittelbar beim Einbau der Fahrzeugleuchten in die Einbauöffnungen erfolgen.

Die Erfindung ist insbesondere im Bereich der Herstellung von Fahrzeugleuchten gewerblich anwendbar.

### Bezugszeichenliste

- I: Verfahrensschritt
- II: Verfahrensschritt
- III: Verfahrensschritt
- IV: Verfahrensschritt
- V: Verfahrensschritt
- VI: Verfahrensschritt
- VII: Verfahrensschritt
- VIII: Verfahrensschritt
- IX: Verfahrensschritt
- X: Verfahrensschritt
- 1: Pfeil (Verfahrensverlauf)
- 2: Pfeil (Verfahrensverlauf)
- 3: Pfeil (Verfahrensverlauf)
- 4: Pfeil (Verfahrensverlauf)
- 5: Pfeil (Verfahrensverlauf)
- 6: Pfeil (Verfahrensverlauf)
- 7: Pfeil (Verfahrensverlauf)
- 11: Pfeil (Verfahrensverlauf)
- 12: Pfeil (Verfahrensverlauf)
- 13: Pfeil (Verfahrensverlauf)
- 21: Pfeil (Verfahrensverlauf)
- 22: Pfeil (Verfahrensverlauf)
- 23: Pfeil (Verfahrensverlauf)
- 31: Pfeil (Verfahrensverlauf)
- 32: Pfeil (Verfahrensverlauf)
- 33: Pfeil (Verfahrensverlauf)
- 100: Bauteil
- 101: Lichtscheibe
- 140: Oberfläche
- 200: Laserstrahl
- 300: Auftreffpunkt
- 400: Oberflächenpartie
- 500: Schnittkante
- 501: Schnittfläche
- 600: Tangente
- 700: Winkel
- 800: Rand
- 900: Endabschnitt
- 1000: Bezugslinie

## Patentansprüche

1. Verfahren zum Laserschneiden von Bauteilen (100, 101), welches vorsieht, einen von einer Laserlichtquelle ausgehenden Laserstrahl (200) auf ein Bauteil (100, 101) zu richten und den Auftreffpunkt (300) des Laserstrahls (200) auf einer Oberflächenpartie (400) des Bauteils (100, 101) entlang einer auszubildenden Schnittlinie einer herzustellenden Schnittkante (500) zu führen, welche Schnittkante (500) sich zusammen setzt aus:
- der Schnittlinie, welche entlang einer dem Auftreffpunkt (300) des von der Laserlichtquelle ausgehenden Laserstrahls (200) zugewandten Oberfläche (140) eines zu beschneidenden Bauteils (100, 101) verläuft, und
- einer sich aus der Sicht des Auftreffpunkts (200) des Laserstrahls (200) gesehen an diese Schnittlinie anschließenden Schnittfläche (501), die sich bei einem vollständigen Schnitt von der Schnittlinie auf der dem Auftreffpunkt (300) des von der Laserlichtquelle ausgehenden Laserstrahls (200) zugewandten Oberflächenpartie (400) ausgehend durch die gesamte Dicke des Bauteils (100, 101) hindurch erstreckt,
wobei sich die Schnittfläche (501) in einem in einer normal zur Schnittlinie liegenden Ebene verlaufenden Querschnitt durch das Bauteil (100, 101) hindurch unter einem Winkel (700) an eine an der Schnittlinie an die dem Auftreffpunkt (300) des von der Laserlichtquelle ausgehenden Laserstrahls (200) zugewandte Oberflächenpartie (400) angelegte Tangente (400) anschließt, und bei einer Betrachtung in mindestens einem in einer normal zur Schnittlinie liegenden Ebene verlaufenden Querschnitt durch das Bauteil (100, 101) die Tangente (600) an die dem Auftreffpunkt (300) des von der Laserlichtquelle ausgehenden Laserstrahls (200) zugewandte Oberflächenpartie (400) und die Schnittfläche (501) aus Sicht der Schnittlinie zum Bauteil hin einen stumpfen Winkel (700) einschließen.

2. Verfahren nach Anspruch 1, wobei der stumpfe Winkel (700) 105° bis 165, besonders bevorzugt 112,5° bis 157,5° beträgt.

3. Verfahren nach Anspruch 1 oder 2, wobei die dem Auftreffpunkt (300) des von der Laserlichtquelle ausgehenden Laserstrahls (200) zugewandte Oberflächenpartie (400) auf einer einem Betrachter beim Umgang mit einer fertigen Fahrzeugleuchte zugewandten Seite (140) eines Bauteils (100, 101) liegt.

4. Verfahren nach Anspruch 1, 2 oder 3, wobei die dem Auftreffpunkt (300) des von der Laserlichtquelle ausgehenden Laserstrahls (200) zugewandte Oberfläche (140) des Bauteils (100, 101) in einem normal zur Schnittlinie verlaufenden Querschnitt durch das Bauteil (100, 101) hindurch gesehen zumindest im Bereich der Oberflächenpartie (400) vom Zentrum des Bauteils (100, 101) zu dessen Rand (800) hin ab fällt.

5. Verfahren nach Anspruch 4, wobei in einem normal zur Schnittlinie verlaufenden Querschnitt durch das Bauteil (100, 101) hindurch gesehen ein zwischen einer die Schnittlinie schneidenden Flächennormalen der Oberflächenpartie (400) und der Schnittfläche (501) bauteilseitig eingeschlossener Winkel größer ist, als ein zwischen einer Flächennormalen im Zentrum des Bauteils (100, 101) und der Schnittfläche (501) bauteilseitig eingeschlossener Winkel.

6. Verfahren nach einem der voranstehenden Ansprüche, wobei das Bauteil (100, 101) in einem normal zur Schnittlinie verlaufenden Querschnitt einen gekrümmten Verlauf seiner dem Auftreffpunkt (300) des von der Laserlichtquelle ausgehenden Laserstrahls (200) zugewandten Oberfläche (140) aufweist, wobei der zwischen einer Flächennormalen und der Schnittfläche (501) bauteilseitig eingeschlossener Winkel mit zunehmendem Abstand vom Zentrum des Bauteils (100, 101) zunimmt.

7. Verfahren nach einem der voranstehenden Ansprüche, wobei die dem Auftreffpunkt (300) des von der Laserlichtquelle ausgehenden Laserstrahls (200) zugewandte Oberflächenpartie (400) in wenigstens einem Endabschnitt (900) einer Oberfläche (140) des Bauteils (100, 101) in einem normal zur Schnittlinie verlaufenden Querschnitt durch das Bauteil (100, 101) gesehen liegt.

8. Verfahren nach Anspruch 7, wobei innerhalb eines Endabschnitts (900) in einem normal zur Schnittlinie verlaufenden Querschnitt ein zwischen einer Flächennormalen zur Oberflächenpartie (400) der dem Auftreffpunkt (300) des von der Laserlichtquelle ausgehenden Laserstrahls (200) zugewandten Oberfläche (140) und der Schnittfläche (501) eingeschlossener Winkel konstant ist, oder zum Rand (800) hin stetig zunimmt.

9. Verfahren nach Anspruch 7 oder 8, wobei die Schnittfläche (501) in Bezug auf die Endabschnitte (900) einer Oberfläche (140) des Bauteils (100, 101) so schräg steht, dass in wenigstens einem normal zur Schnittlinie verlaufenden Querschnitt durch das Bauteil (100, 101) ein Winkel zwischen einer Bezugslinie (1000), welche durch das Bauteil (100, 101) hindurchgeht und gleiche Winkel in Bezug auf die jeweiligen Endabschnitte (900) ausbildet, und einer Linie senkrecht zu jedem der Endabschnitte (900) kleiner ist, als ein Winkel zwischen der Bezugslinie (1000) und einer Linie senkrecht zu der Schnittfläche (501).

10. Verfahren nach Anspruch 7, 8 oder 9, wobei die Schnittfläche (501) in wenigstens einem normal zur Schnittlinie verlaufenden Querschnitt durch das Bauteil (100, 101) in mindestens einem Endabschnitt (900) parallel zu einer Bezugslinie (1000) verläuft, welche durch das Bauteil (100, 101) hindurchgeht und gleiche Winkel in Bezug auf die jeweiligen Endabschnitte (900) ausbildet.

11. Verfahren nach einem der voranstehenden Ansprüche, wobei es sich bei dem Bauteil (100) um eine Lichtscheibe (101) einer Fahrzeugleuchte handelt.

12. Verfahren nach Anspruch 11, wobei das Laserschneiden in Zusammenhang mit der Herstellung einer Fahrzeugleuchte angewandt wird, welche:
- einen von einer Lichtscheibe (101) und einem Leuchtengehäuse umschlossenen, zumindest ein Leuchtmittel mit wenigstens einer Lichtquelle beherbergenden Leuchteninnenraum,
- ein Leuchtengehäuse mit zumindest einer an der fertigen Fahrzeugleuchte von der Lichtscheibe (101) verschlossen und von wenigstens einer Wandung des Leuchtengehäuses umgebenen Lichtöffnung für einen Lichtaustritt,
aufweist, wobei:
- die Wandung eine der Lichtöffnung zugewandte Innenoberfläche und eine der Lichtöffnung abgewandte Außenoberfläche sowie eine um die Lichtöffnung umlaufende Randfläche aufweist, welche entlang eines mit seiner Kontur den Flächenverlauf der Lichtöffnung widerspiegelnden Innenrands an die Innenoberfläche und entlang eines Außenrands an die Außenoberfläche angrenzt und zwischen Innenrand und Außenrand die Innenoberfläche und die Außenoberfläche verbindet und den Flächenverlauf der Lichtöffnung fortsetzt, und
- an dem Leuchtengehäuse mindestens ein Aufnahmepunkt vorgesehen ist, und zunächst die Verfahrensschritte:
- Bestückung (I) des Leuchtengehäuses mit den von der fertigen Fahrzeugleuchte im Leuchteninnenraum beherbergten Einrichtungen und Bauteilen,
- Herstellung (II) einer gemäß dem Flächenverlauf der Lichtöffnung geformten Lichtscheibe (101) in einem Übermaß, so dass die auf der Randfläche aufgelegte Lichtscheibe in mindestens einer Richtung über den Außenrand der Randfläche übersteht,
- Verschließen (III) der Lichtöffnung durch Auflegen der Lichtscheibe (101) auf die Randfläche und Verbinden der Lichtscheibe (101) mit dem Leuchtengehäuse, wobei die Lichtscheibe (101) in der mindestens einen Richtung über den Außenrand übersteht, und
- Einbringen (VII) der Fahrzeugleuchte entsprechend ihrer Anordnung in einer Einbauöffnung lagegenau in eine Aufnahme
ausgeführt werden, bevor ein Zuschneiden (VIII) eines über den Außenrand ragenden Rands (800) der Lichtscheibe (101) unter Bezugnahme auf die als Fixpunkte dienenden Aufnahmepunkte durch Laserschneiden erfolgt, und schließlich nach dem Laserschneiden eine Entnahme (IX) der Fahrzeugleuchte aus der Aufnahme erfolgt.

13. Verfahren nach Anspruch 12, wobei nach dem Verschließen (III) der Lichtöffnung und vor dem Einbringen (VII) der mit der im Übermaß hergestellten Lichtscheibe versehenen Fahrzeugleuchte in die Aufnahme mindestens ein Behandlungsschritt vorzugsweise aus der Gruppe:
- Polieren (IV) der Lichtscheibe, und/oder
- Tempern (V) der Fahrzeugleuchte, und /oder
- Qualitätsprüfung (VI), und/oder
- Anbringung mindestens eines Befestigungselements mindestens einer zur Befestigung der Fahrzeugleuchte in einer Einbauöffnung eines Fahrzeugs vorgesehenen Befestigungsvorrichtung an dem mindestens einen hierfür vorgesehenen Aufnahmepunkt am Leuchtengehäuse
vorgenommen wird.

14. Verfahren nach Anspruch 12 oder 13, wobei die nach deren Entnahme aus der Aufnahme vollständig zum Einbau in eine Einbauöffnung vorbereitete Fahrzeugleuchte:
- in eine Transportverpackung eingebracht und gelagert und/oder transportiert, und/oder
- einer Montagelinie zum Einbau in eine Einbauöffnung zugeführt (XI) wird.

15. Verfahren nach einem der voranstehenden Ansprüche, wobei ein umlaufender Laserzuschnitt des Bauteils (100, 101) vorgesehen ist.
